# EUROPEAN PATENT APPLICATION

(11) **EP 4 730 137 A1**
(43) Date of publication of application: **22.04.2026**
(21) Application number: 24844216.2
(22) Date of filing: 23.02.2024
(51) Int. Cl.: G06F 11/36

(54) **TIME-TYPE MEMORY SECURITY DETECTION METHOD, APPARATUS, AND COMPUTING DEVICE CLUSTER**

(30) Priority: 26.07.2023 CN 202310929124
(71) Applicant: Huawei Technologies Co., Ltd., Shenzhen, Guangdong 518129 (CN)
(72) Inventor: WANG, Yaxing, Shenzhen, Guangdong 518129 (CN); XU, Maoda, Shenzhen, Guangdong 518129 (CN); LIN, Weixin, Shenzhen, Guangdong 518129 (CN)
(74) Representative: Maiwald GmbH
(86) International application number: PCT/CN2024/078341
(87) International publication number: WO 2025/020517

(57) **Abstract**

A time-type memory security detection method is disclosed, including: obtaining, based on source code, a plurality of analysis units each including a function or a function group; performing status analysis on a status of a memory block to which a pointer in the analysis unit points, where the plurality of analysis units include a first analysis unit and a second analysis unit, the first analysis unit includes a function call statement used to call the second analysis unit; and when the function call statement is analyzed, performing, based on summary information of the second analysis unit, status analysis on a status of a memory block to which a pointer associated with the function call statement points, where the summary information of the analysis unit is used to describe memory statuses present when a memory block to which an input/output pointer in the analysis unit points enters and exits the analysis unit; and generating summary information of the analysis unit based on a status analysis result corresponding to the analysis unit, and obtaining a detection result related to a time-type memory problem in the analysis unit. In this way, resource overheads and false and missing report rates are reduced when the time-type memory problem is detected.

## Description

This application claims priority to Chinese Patent Application No. 202310929124.7, filed with the China National Intellectual Property Administration on July 26, 2023 and entitled "TIME-TYPE MEMORY SECURITY DETECTION METHOD AND APPARATUS, AND COMPUTING DEVICE CLUSTER", which is incorporated herein by reference in its entirety.

### TECHNICAL FIELD

This application relates to the information technology (information technology, IT) field, and in particular, to a time-type memory security detection method and apparatus, and a computing device cluster.

### BACKGROUND

Currently, a large proportion of vulnerabilities resolved through annual update to products such as operating systems or browsers are caused by memory security problems. The memory security problem may include a time-type memory problem (for example, memory leak, use after free, and double free). The time-type memory problem is a memory security problem caused by violation of security time sequence rules during memory operations, for example, memory leak, double free, and use after free. In analysis of common weakness enumeration (common weakness enumeration, CWE) top problems acknowledged in the industry, the use after free problem (including the double free problem) ranks the 7^{th} place, and the memory leak problem ranks the 36^{th} place. It is clear that the time-type memory problem is a significant difficulty in the industry. However, program software that has the time-type memory problem, including network devices, operating system kernels, browsers, audio and video processing, and databases, has a large scale and strong security requirements over decades of development. This raises a high requirement on resource overheads and false and missing report rates that are required for detecting the time-type memory problem. Therefore, how to reduce the resource overheads and the false and missing report rates when the time-type memory problem is detected is an urgent technical problem to be resolved currently.

### SUMMARY

This application provides a time-type memory security detection method and apparatus, a computing device cluster, a computer storage medium, and a computer product, to reduce resource overheads and false and missing report rates when a time-type memory problem is detected.

According to a first aspect, this application provides a time-type memory security detection method, including: obtaining a plurality of analysis units based on source code, where the analysis unit includes a function or a function group; performing status analysis on a status of a memory block to which a pointer in the analysis unit points, where the plurality of analysis units include a first analysis unit and a second analysis unit, the first analysis unit includes a function call statement, and the function call statement is used to call the second analysis unit; and when the function call statement is analyzed, performing, based on summary information of the second analysis unit, status analysis on a status of a memory block to which a pointer associated with the function call statement points, where the summary information of the analysis unit is used to describe memory statuses present when a memory block to which an input/output pointer in the analysis unit points enters and exits the analysis unit; and generating summary information of the analysis unit based on a status analysis result corresponding to the analysis unit, and obtaining a detection result related to a time-type memory problem in the analysis unit. For example, the input/output pointer may be a pointer associated with a formal parameter, a global variable, and a return value. For example, the source code may be but is not limited to code written by a developer.

In this way, when the time-type memory problem is detected, memory behavior between different analysis units can be decoupled by dividing the source code. In this way, whether the time-type memory problem exists in each analysis unit can be separately analyzed, thereby avoiding global analysis, and reducing resource overheads. In addition, the summary information of the analysis unit is used, so that when there is call behavior between the analysis units and a caller is analyzed, summary information of a callee can be directly queried for, and internal memory behavior of the callee does not need to be analyzed, thereby reducing an analysis amount and improving analysis efficiency. In addition, in a detection process, cross-analysis-unit memory behavior analysis can be performed based on the summary information. In this way, cross-analysis-unit memory behavior detection can be implemented, and false and missing report rates are reduced. In addition, the summary information of the analysis unit includes the status of the memory block corresponding to the pointer associated with the formal parameter, the global variable, and the return value, so that the summary information can include all information about interaction between the analysis unit and the outside, thereby reducing a loss between the summary information of the analysis unit and actual memory behavior inside the analysis unit.

In a possible implementation, performing status analysis on the status of the memory block to which the pointer in the analysis unit points includes: iteratively performing status analysis on the status of the memory block to which the pointer in the analysis unit points, where in a process of a current round of iteration, status analysis is performed, based on summary information generated in a previous round of iteration, on the status of the memory block to which the pointer in the analysis unit points. For example, the current round of iteration may be a latest round of iteration. For example, if the latest round of iteration is a 5^{th} round of iteration, the 5^{th} round is the current round. In addition, if the current round is an i^{th} round, a previous round of the current round is an (i-1)^{th} round.

Generating the summary information of the analysis unit based on the status analysis result corresponding to the status analysis, and obtaining the detection result related to the time-type memory problem in the analysis unit includes: in the iteration process, identifying the time-type memory problem in the analysis unit based on a status analysis result obtained in the current round of iteration, and updating the summary information of the analysis unit; and when summary information of the plurality of analysis units is no longer updated, using, as a final detection result, a time-type memory problem that exists in the plurality of analysis units and that is identified in a process of the last round of iteration.

In this way, through iterative analysis, the summary information of all the analysis units can finally reach a stable state, that is, the summary information of all the analysis units is no longer updated. In this case, because no benefit can be obtained through iteration, the iteration may end. In addition, it may be considered that the summary information generated in the last iteration is correct. Therefore, the time-type memory problem identified in this case is also accurate. In this way, the time-type memory problem identified in the process of the last round of iteration is used as the final detection result, so that detection accuracy can be improved. In addition, the summary information is constructed, and the summary information obtained in the previous round is iteratively used, so that a call graph (call graph) that describes a call relationship between all the analysis units does not need to be constructed, and an analysis sequence between the analysis units does not need to be considered. Moreover, because global pointer analysis needs to be performed to construct the call graph, consumed resource overheads are high. However, in this application, because the call graph does not need to be constructed, the resource overheads can be greatly reduced.

In a possible implementation, performing status analysis on the status of the memory block to which the pointer in the analysis unit points includes: traversing statements in the analysis unit according to a preset status transition rule, and performing status analysis on the status of the memory block to which the pointer in the analysis unit points, where the status transition rule is used to describe a status change rule of a memory block to which a first pointer points when a value is assigned to the first pointer or the first pointer is used. In this way, the status of the memory block to which the pointer points can be analyzed by traversing the statements in the analysis unit according to the status transition rule. In addition, in an analysis process, a memory allocation point, a memory free point, and a memory use point can be identified by using a function statement, so that time-type memory problems of double free and use after free can be resolved.

In a possible implementation, identifying the time-type memory problem in the analysis unit based on the status analysis result corresponding to the status analysis specifically includes: when the status analysis result indicates that the status of the memory block is a terminated state, determining that a statement related to the memory block in the analysis unit has the time-type memory problem, and determining an error report type and an error report statement based on a type of the terminated state, where the terminated state indicates that the memory block is not correctly used, the error report type includes one or more of double free, memory leak, and use after free, and the error report statement includes one or more of a memory allocation statement, a memory use statement, and a memory free statement; or when the status analysis result indicates that the status of the memory block is an intermediate state, determining that a statement related to the memory block in the analysis unit does not have the time-type memory problem, where the intermediate state indicates that the memory block is being correctly used. Therefore, whether the time-type memory problem exists can be analyzed based on the status analysis result.

In a possible implementation, the summary information of the analysis unit includes summary information of the pointer that is in the analysis unit and that is associated with the formal parameter, the global variable, and the return value, and the pointer associated with the formal parameter, the global variable, and the return value includes a second pointer.

Summary information of the second pointer includes one or more of the following: an identifier of the second pointer, a location of a formal parameter, a global variable, or a return value associated with the second pointer in the analysis unit, a relationship between the second pointer and a formal parameter, a global variable, and a return value in the analysis unit, a status present when a memory block to which the second pointer points enters or exits the analysis unit, or alias and non-alias relationships between the second pointer and a pointer other than the second pointer in the pointer that is in the analysis unit and that is associated with the formal parameter, the global variable, and the return value. In this way, the summary information can include all the information about the interaction between the analysis unit and the outside, thereby reducing the loss between the summary information of the analysis unit and the actual memory behavior inside the analysis unit.

In a possible implementation, the input/output pointer in the analysis unit may include one or more of the following: a pointer that is related to a formal parameter or a return value and that is brought in or brought out of the analysis unit, or a global variable, or a pointer that is related to the global variable and that is brought in or brought out of the analysis unit by the global variable. In this way, the summary information can include all the information about the interaction between the analysis unit and the outside, thereby reducing the loss between the summary information of the analysis unit and the actual memory behavior inside the analysis unit.

In a possible implementation, before performing status analysis on the status of the memory block to which the pointer in the analysis unit points, the method further includes: when a plurality of different branches in a control flow graph of the analysis unit point to a same node, normalizing statuses of memory blocks to which pointers passed from the plurality of different branches point. In this way, the statuses of the memory blocks to which the pointers passed from these branches point can be unique, thereby reducing the false and missing report rates.

In a possible implementation, normalizing the statuses of the memory blocks to which the pointers passed from the plurality of different branches point specifically includes: converting a wild pointer in the plurality of different branches into a null pointer. A status of a memory block to which the null pointer points may be any status. In this way, status normalization is implemented.

In a possible implementation, before performing status analysis on the status of the memory block to which the pointer in the analysis unit points, the method further includes: eliminating a redundant path in the analysis unit. In this way, detection efficiency is improved, and the false and missing report rates are reduced.

In a possible implementation, eliminating the redundant path in the analysis unit includes one or more of the following:
when there are a dominance relationship and a post-dominance relationship between a memory allocation point and a memory free point of the memory block to which the second pointer in the analysis unit points, determining that reachability determining does not need to be performed on the memory block to which the second pointer points; or
when a condition in an if statement in the analysis unit is always true, eliminating a branch whose condition is false in the if statement, or when a condition in an if statement in the analysis unit is always false, eliminating a branch whose condition is true in the if statement; or
when a condition in a while statement in the analysis unit is always false, eliminating a branch whose condition is true in the while statement; or
when a second if statement is executed immediately after a first if statement is executed in the analysis unit, and a value of a condition in the first if statement is the same as a value of a condition in the second if statement, eliminating the second if statement, adding a branch whose condition is true in the second if statement to a branch whose condition is true in the first if statement, and adding a branch whose condition is false in the second if statement to a branch whose condition is false in the first if statement; or when a second if statement is executed immediately after a first if statement is executed in the analysis unit, and a value of a condition in the first if statement is opposite to a value of a condition in the second if statement, eliminating the second if statement, adding a branch whose condition is true in the second if statement to a branch whose condition is false in the first if statement, and adding a branch whose condition is false in the second if statement to a branch whose condition is true in the first if statement; or
when a call result of the function in the analysis unit is used as a determining condition, and the determining condition affects path reachability determining, performing function inline on the function; or when a call result of the function in the analysis unit is not used as a determining condition, or the determining condition does not affect path reachability determining, skipping performing inline on the function.

In a possible implementation, the method further includes: in a process of performing status analysis on the status of the memory block to which the pointer in the analysis unit points, when a plurality of different branches in a control flow graph of the analysis unit point to a same node, recording a first state of a memory block corresponding to the node when a first variable, passed from a 1^{st} branch in the plurality of branches, enters the node; and based on the recorded first state, traversing statements in a node on an edge that is associated with the node and that is not explored in the control flow graph, and performing status analysis on a status of a memory block to which a pointer in a traversed statement points. In this way, path exploration space is simplified, path exploration efficiency is improved, and the detection efficiency is further improved.

In a possible implementation, the method further includes: when the first state is inconsistent with a second state of the memory block corresponding to the node when a pointer, passed from another branch in the plurality of branches, enters the node, determining the error report type and the error report statement based on a conflict between the first state and the second state, where the error report type includes one or more of the double free, the memory leak, and the use after free, and the error report statement includes one or more of the memory allocation statement, the memory use statement, and the memory free statement. In this way, the recorded state is compared with the state of the memory block corresponding to the node when the pointer, passed from the current branch, enters the node, so that it can be learned whether the two branches have the time-type memory problem, thereby improving the detection efficiency.

In a possible implementation, the method further includes: when the first state is inconsistent with a second state of the memory block corresponding to the node when a pointer, passed from another branch in the plurality of branches, enters the node, and the first state is allocated, adding a null assignment statement to the another branch, where the null assignment statement is used to assign a null value to the pointer passed from the another branch, so that statuses of memory blocks to which pointers passed from the plurality of different branches point are normalized. In this way, the statuses of the memory blocks to which the pointers passed from these branches point can be unique, thereby reducing the false and missing report rates.

In addition, prompt information may alternatively be output. The prompt information prompts to modify the second state to a null state, or modify the second state to the first state. In this way, a user can normalize, based on a requirement of the user, the statuses of the memory blocks to which the pointers passed from the plurality of different branches point, to resolve the conflict between the first state and the second state.

In a possible implementation, after obtaining the detection result related to the time-type memory problem in the analysis unit, the method further includes: correcting the detection result by using a constraint solver. In this way, the detection result is corrected, to further reduce the false and missing report rates.

In a possible implementation, the detection result includes one or more of the following: a module having the time-type memory problem, a code line having the time-type memory problem, a line or a column of a pointer having the time-type memory problem in the source code, or an execution path from a memory allocation point having the time-type memory problem to an error report point, where the error report point includes a memory use point or a memory free point.

According to a second aspect, this application provides a time-type memory security detection apparatus, including a first processing module and a second processing module. The first processing module is configured to obtain a plurality of analysis units based on source code, where the analysis unit includes a function or a function group. The second processing module is configured to: perform status analysis on a status of a memory block to which a pointer in the analysis unit points, where the plurality of analysis units include a first analysis unit and a second analysis unit, the first analysis unit includes a function call statement, and the function call statement is used to call the second analysis unit; and when the function call statement is analyzed, perform, based on summary information of the second analysis unit, status analysis on a status of a memory block to which a pointer associated with the function call statement points, where the summary information of the analysis unit is used to describe memory statuses present when a memory block to which an input/output pointer in the analysis unit points enters and exits the analysis unit. The second processing module is further configured to: generate summary information of the analysis unit based on a status analysis result corresponding to the analysis unit, and obtain a detection result related to a time-type memory problem in the analysis unit.

In a possible implementation, when performing status analysis on the status of the memory block to which the pointer in the analysis unit points, the second processing module is specifically configured to iteratively perform status analysis on the status of the memory block to which the pointer in the analysis unit points, where in a process of a current round of iteration, status analysis is performed, based on summary information generated in previous iteration, on the status of the memory block to which the pointer in the analysis unit points.

When generating the summary information of the analysis unit based on the status analysis result corresponding to the status analysis, and obtaining the detection result related to the time-type memory problem in the analysis unit, the second processing module is specifically configured to: in the iteration process, identify the time-type memory problem in the analysis unit based on a status analysis result obtained in the current round of iteration, and update the summary information of the analysis unit; and when summary information of the plurality of analysis units is no longer updated, use, as a final detection result, a time-type memory problem that exists in the plurality of analysis units and that is identified in a process of the last round of iteration.

In a possible implementation, when performing status analysis on the status of the memory block to which the pointer in the analysis unit points, the second processing module is specifically configured to: traverse statements in the analysis unit according to a preset status transition rule, and perform status analysis on the status of the memory block to which the pointer in the analysis unit points, where the status transition rule is used to describe a status change rule of a memory block to which a first pointer points when a value is assigned to the first pointer or the first pointer is used.

In a possible implementation, when identifying the time-type memory problem in the analysis unit based on the status analysis result corresponding to the status analysis, the second processing module is specifically configured to: when the status analysis result indicates that the status of the memory block is a terminated state, determine that a statement related to the memory block in the analysis unit has the time-type memory problem, and determine an error report type and an error report statement based on a type of the terminated state, where the terminated state indicates that the memory block is not correctly used, the error report type includes one or more of double free, memory leak, and use after free, and the error report statement includes one or more of a memory allocation statement, a memory use statement, and a memory free statement; or when the status analysis result indicates that the status of the memory block is an intermediate state, determine that a statement related to the memory block in the analysis unit does not have the time-type memory problem, where the intermediate state indicates that the memory block is being correctly used.

In a possible implementation, the summary information of the analysis unit includes summary information of a pointer that is in the analysis unit and that is associated with a formal parameter, a global variable, and a return value, and the pointer associated with the formal parameter, the global variable, and the return value includes a second pointer. For example, the pointer associated with the formal parameter, the global variable, and the return value may be understood as the input/output pointer.

Summary information of the second pointer includes one or more of the following: an identifier of the second pointer, a location of a formal parameter, a global variable, or a return value associated with the second pointer in the analysis unit, a relationship between the second pointer and a formal parameter, a global variable, and a return value in the analysis unit, a status present when a memory block to which the second pointer points enters or exits the analysis unit, or alias and non-alias relationships between the second pointer and a pointer other than the second pointer in the input/output pointer in the analysis unit.

In a possible implementation, the input/output pointer in the analysis unit may include one or more of the following: a pointer that is related to a formal parameter or a return value and that is brought in or brought out of the analysis unit, or a global variable, or a pointer that is related to the global variable and that is brought in or brought out of the analysis unit by the global variable.

In a possible implementation, before performing status analysis on the status of the memory block to which the pointer in the analysis unit points, the second processing module is further configured to: when a plurality of different branches in a control flow graph of the analysis unit point to a same node, normalize statuses of memory blocks to which pointers passed from the plurality of different branches point.

In a possible implementation, when normalizing the statuses of the memory blocks to which the pointers passed from the plurality of different branches point, the second processing module is specifically configured to: convert a wild pointer in the plurality of different branches into a null pointer.

In a possible implementation, before performing status analysis on the status of the memory block to which the pointer in the analysis unit points, the second processing module is further configured to: eliminate a redundant path in the analysis unit.

In a possible implementation, eliminating the redundant path in the analysis unit includes one or more of the following:
when there are a dominance relationship and a post-dominance relationship between a memory allocation point and a memory free point of the memory block to which the second pointer in the analysis unit points, determining that reachability determining does not need to be performed on the memory block to which the second pointer points; or
when a condition in an if statement in the analysis unit is always true, eliminating a branch whose condition is false in the if statement, or when a condition in an if statement in the analysis unit is always false, eliminating a branch whose condition is true in the if statement; or
when a condition in a while statement in the analysis unit is always false, eliminating a branch whose condition is true in the while statement; or
when a second if statement is executed immediately after a first if statement is executed in the analysis unit, and a value of a condition in the first if statement is the same as a value of a condition in the second if statement, eliminating the second if statement, adding a branch whose condition is true in the second if statement to a branch whose condition is true in the first if statement, and adding a branch whose condition is false in the second if statement to a branch whose condition is false in the first if statement; or when a second if statement is executed immediately after a first if statement is executed in the analysis unit, and a value of a condition in the first if statement is opposite to a value of a condition in the second if statement, eliminating the second if statement, adding a branch whose condition is true in the second if statement to a branch whose condition is false in the first if statement, and adding a branch whose condition is false in the second if statement to a branch whose condition is true in the first if statement; or
when a call result of the function in the analysis unit is used as a determining condition, and the determining condition affects path reachability determining, performing function inline on the function; or when a call result of the function in the analysis unit is not used as a determining condition, or the determining condition does not affect path reachability determining, skipping performing inline on the function.

In a possible implementation, the second processing module is further configured to: in a process of performing status analysis on the status of the memory block to which the pointer in the analysis unit points, when a plurality of different branches in a control flow graph of the analysis unit point to a same node, record a first state of a memory block corresponding to the node when a first variable, passed from a 1^{st} branch in the plurality of branches, enters the node; and based on the recorded first state, traverse statements in a node on an edge that is associated with the node and that is not explored in the control flow graph, and perform status analysis on a status of a memory block to which a pointer in a traversed statement points.

In a possible implementation, the second processing module is further configured to: when the first state is inconsistent with a second state of the memory block corresponding to the node when a pointer, passed from another branch in the plurality of branches, enters the node, determine the error report type and the error report statement based on a conflict between the first state and the second state, where the error report type includes one or more of the double free, the memory leak, and the use after free, and the error report statement includes one or more of the memory allocation statement, the memory use statement, and the memory free statement.

In a possible implementation, the second processing module is further configured to: when the first state is inconsistent with a second state of the memory block corresponding to the node when a pointer, passed from another branch in the plurality of branches, enters the node, and the first state is allocated, add a null assignment statement to the another branch, where the null assignment statement is used to assign a null value to the pointer passed from the another branch; or output prompt information, where the prompt information prompts to modify the second state to a null state, or modify the second state to the first state.

In a possible implementation, after outputting the detection result related to the time-type memory problem in the analysis unit, the second processing module is further configured to: correct the detection result by using a constraint solver.

In a possible implementation, the detection result includes one or more of the following: a module having the time-type memory problem, a code line having the time-type memory problem, a line or a column of a pointer having the time-type memory problem in the source code, or an execution path from a memory allocation point having the time-type memory problem to an error report point, where the error report point includes a memory use point or a memory free point.

According to a third aspect, this application provides a computing device cluster, including at least one computing device. Each computing device includes a processor and a memory, and the processor of the at least one computing device is configured to execute instructions stored in the memory of the at least one computing device, so that the computing device cluster performs the method according to the first aspect or any one of the possible implementations of the first aspect.

According to a fourth aspect, this application provides a computer-readable storage medium, including computer program instructions. When the computer program instructions are executed by a computing device, the computing device performs the method according to the first aspect or any one of the possible implementations of the first aspect; or when the computer program instructions are executed by a computing device cluster, the computing device cluster performs the method according to the first aspect or any one of the possible implementations of the first aspect. For example, the computing device cluster may include one or more computing devices.

According to a fifth aspect, this application provides a computer program product including instructions. When the instructions are run by a computing device, the computing device is enabled to perform the method according to the first aspect or any one of the possible implementations of the first aspect; or when the instructions are run by a computing device cluster, the computing device cluster is enabled to perform the method according to the first aspect or any one of the possible implementations of the first aspect. For example, the computing device cluster may include one or more computing devices.

It should be understood that, for beneficial effect of the second aspect to the fifth aspect, refer to related descriptions in the first aspect. Details are not described herein again.

### BRIEF DESCRIPTION OF DRAWINGS

The following briefly describes accompanying drawings used in describing embodiments or the conventional technology.
FIG. 1 is a diagram of an architecture of a time-type memory problem detection system according to an embodiment of this application;
FIG. 2 is a diagram of a structure of summary information of a pointer in an analysis unit according to an embodiment of this application;
FIG. 3 is a diagram of another structure of summary information of a pointer in an analysis unit according to an embodiment of this application;
FIG. 4 is a diagram of an in-out graph (in-out graph) of an analysis unit according to an embodiment of this application;
FIG. 5 is a diagram of a status transition rule of a memory block according to an embodiment of this application;
FIG. 6 is a diagram of a control flow graph of an analysis unit according to an embodiment of this application;
FIG. 7 is a diagram of another control flow graph of an analysis unit according to an embodiment of this application;
FIG. 8 is a diagram of a function call graph in source code according to an embodiment of this application;
FIG. 9 is a diagram of another architecture of a time-type memory problem detection system according to an embodiment of this application;
FIG. 10 is a diagram of comparison of control flow graphs of an analysis unit obtained before and after a redundant path in the analysis unit is eliminated according to an embodiment of this application;
FIG. 11 is another diagram of comparison of control flow graphs of an analysis unit obtained before and after a redundant path in the analysis unit is eliminated according to an embodiment of this application;
FIG. 12 is a diagram of comparison of control flow graphs of an analysis unit in which whether function expansion used to eliminate redundancy is performed according to an embodiment of this application;
FIG. 13 is a schematic flowchart of a time-type memory problem detection method according to an embodiment of this application;
FIG. 14 is a diagram of a structure of a time-type memory problem detection apparatus according to an embodiment of this application;
FIG. 15 is a diagram of a structure of a computing device according to an embodiment of this application;
FIG. 16 is a diagram of a structure of a computing device cluster according to an embodiment of this application; and
FIG. 17 is a diagram of a structure of another computing device cluster according to an embodiment of this application.

### DESCRIPTION OF EMBODIMENTS

A term "and/or" in this specification describes an association relationship between associated objects and indicates that three relationships may exist. For example, A and/or B may indicate the following three cases: Only A exists, both A and B exist, and only B exists. A character "/" in this specification indicates an "or" relationship between the associated objects. For example, A/B indicates A or B.

In the specification and claims of this application, terms "first", "second", and the like are intended to distinguish between different objects, but do not indicate a particular order of the objects. For example, a first response message, a second response message, and the like are used to distinguish between different response messages, but do not indicate a particular order of the response messages.

In addition, in embodiments of this application, a word "example", "for example", or the like indicates giving an example, an illustration, or a description. Any embodiment or design solution described as an "example" or "for example" in embodiments of this application should not be explained as being more preferred or having more advantages than another embodiment or design solution. Exactly, use of the words such as "example" or "for example" is intended to present a relative concept in a specific manner.

In descriptions of embodiments of this application, unless otherwise specified, "a plurality of" means two or more. For example, a plurality of processing units mean two or more processing units, and a plurality of elements mean two or more elements.

First, related technical terms in technical solutions provided in this application are described.

### (1) Memory security problem

If a computer program performs destructive access to a memory area, a software error or a security vulnerability may be caused, which is referred to as a memory security problem of the program. The destructive access behavior includes null pointer dereference, out-of-bounds read, out-of-bounds write, use after free, memory leak, and double free. The null pointer dereference, the out-of-bounds read, and the out-of-bounds write are unrelated to a memory access sequence, and are only related to whether a space limit is exceeded at the memory access moment, which are referred to as space-type memory security problems. The use after free, the memory leak, and the double free are closely related to the memory access sequence, which are referred to as time-type memory problems.

### (2) Control flow graph (control flow graph, CFG)

The control flow graph, also referred to as a control flowchart, is an abstract representation of a process or program, is an abstract data structure used in a compiler and maintained by the compiler, and indicates all paths traversed during program execution. The control flow graph may include a series of nodes and edges. A node indicates a basic block (basic block, BB) in a program. Statements in the basic block are executed in sequence, jumping from the last statement of a basic block to the first statement of a next basic block. An edge indicates a control flow transfer relationship between basic blocks. The control flow transfer includes a branch of a conditional statement (for example, an if statement and a switch statement), an iteration of a loop statement, function call and return, and the like. The control flow graph connects different basic blocks by using these edges, and shows a control procedure of the program.

### (3) Basic block

The basic block is a sequence of instructions without branches, namely, a group of statements that are executed continuously.

### (4) Dominance and post-dominance

If all paths to a basic block N starting from a program start point reach a basic block M before reaching the basic block N, the basic block M dominates the basic block N. For example, if a BB 1 is required to pass through to reach a BB 2, it means the BB 1 dominates the BB 2.

Considering an opposite direction, if all paths from the basic block N to a program end point reach the basic block M before reaching the end point, the basic block M post-dominates the basic block N.

### (5) Inline (inline) expansion

The inline expansion is an optimization technology that directly expands a function body to a call location. The inline expansion can be manually specified (for example, an inline keyword) or automatically completed through compilation optimization.

### (6) Alias relationship

When two pointers p and q point to a same memory area, allocation, free, and use of p are functionally equivalent to allocation, free, and use of q, and there is an alias relationship between p and q.

### (7) Static single assignment (static single assignment, ssa)

The static single assignment is a feature of an intermediate representation (intermediate representation, IR) generated by the compiler. Each variable is assigned a value only once. In an original program, if a same variable is assigned a value for many times, a new variable name is generated by adding a subscript index to an old variable name to identify the variables and different versions thereof.

### (8) phi node

The phi node is on the IR with the ssa feature. If a current value of a variable i comes from previous two different branches i1 and i2, a phi node i3 = phi(i1, i2) is created to ensure that each variable is assigned a value only once, where the phi node is used to identify that i3 may be equal to i1 or i2.

### (9) Declaration point

The declaration point specifies a type of a variable p, but provides no definition, for example, "int *p" and "func(int *p)".

### (10) Definition point

The definition point is a definition statement that assigns a value to any variable p, for example, "p = malloc(100)", "p = 10", and "p = func(a)".

### (11) Allocation point

The allocation point is a type of definition point, and is a statement that defines a pointer p by using a return value of a memory allocation function. The memory allocation function may also be a user defined function, for example, "p = malloc(100)".

### (12) Use point

The use point is a statement for using a memory block to which the pointer p points. Use of the memory block may be further classified into two forms: load and store (load/store). For example, "a = *p" is load behavior, and "*p = 10" is store behavior.

### (13) Free point

The free point is a statement that frees, by using a memory free function, the memory block to which the pointer p points. The memory free function may also be a user defined function, for example, "free(p)".

### (14) Source code

The source code is a text file written in a programming language, and includes instructions and algorithms for implementing specific functions. The source code may be converted into a machine language or bytecode by a compiler or an interpreter, so that a computer can execute a program.

The following describes the technical solutions provided in this application.

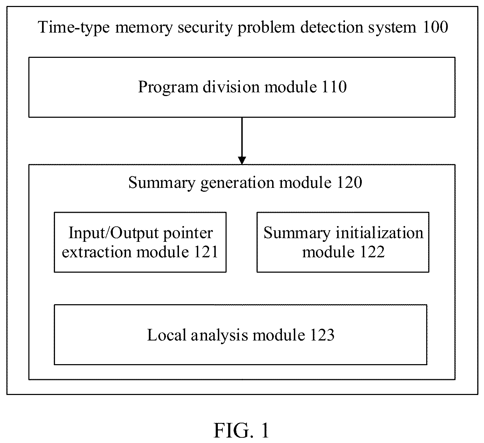

For example, FIG. 1 is a diagram of an architecture of a time-type memory problem detection system according to an embodiment of this application. As shown in FIG. 1, the time-type memory problem detection system 100 may include a program division module 110 and a summary generation module 120. The program division module 110 is mainly configured to divide source code into independent analysis units. Each analysis unit includes a function or a function group. In this way, memory behavior of the analysis units can be decoupled, so that a call sequence between the analysis units can be ignored subsequently. In addition, to further reduce coupling between the analysis units, so as to simplify subsequently generated summary information and improve analysis efficiency and analysis precision, a plurality of strongly coupled functions may be used as a function group based on a call relationship between functions in the source code. For example, in an if statement in a function, when a condition is satisfied, flag is freed; or when the condition is not satisfied, flag is not freed. In addition, a definition of flag comes from an upper-level function. In this case, the function in which the if statement is located is strongly coupled to the upper-level function. The function group including the function and the upper-level function is used as an analysis unit, so that impact caused by different flag values does not need to be analyzed when the summary information is subsequently generated, thereby simplifying the summary information.

The summary generation module 120 mainly separately processes the analysis units obtained through division by the program division module 110, to obtain summary information of each analysis unit, and analyze a time-type memory problem in each analysis unit. The summary information of the analysis unit is used to describe statuses present when a memory block, to which a pointer that is in the analysis unit and that is associated with a formal parameter, a global variable, and a return value points, enters and exits the analysis unit. For example, states of the memory block may include: uninitialized (kUninitialized), initialized (kInitialized), a null pointer (kNull), allocated (kAllocated), or freed (kFreed). For example, "int *p" only declares p and does not point to any memory block. Therefore, it is considered that the memory block to which p points is in the kUninitialized state, and any subsequent use of p is incorrect. "int p = 100" indicates that a value of p is 100, and 100 is a variable stored on a stack, which indicates that p points to a memory area on the stack. Therefore, it is considered that the memory block to which p points is in the kInitialized state. The memory on the stack is allocated and freed by the system, and it is therefore incorrect to manually free the memory on the stack. "int *p = malloc(100)" indicates that p points to allocated heap memory. If a length of the memory block is 100, it is considered that the memory block to which p points is in the kAllocated state. The heap memory needs to be manually allocated and freed, and it is therefore incorrect to allocate but not free the heap memory. "free (p)" indicates that p points to freed heap memory. The memory block to which p points is in the kFreed state. The memory block to which p points is freed, and therefore, any subsequent use of p is incorrect. The stack memory and the heap memory can be well distinguished by designing the statuses of the memory block in this manner. In programming languages such as the C language, a pointer variable and a non-pointer variable are not clearly distinguished. A developer can write code such as "int p = malloc (100)" or int *p = 10. Although being of the int type in the former code, p is essentially a pointer that points to a start address of heap memory with a length of 100 and needs to be freed later. Although being of the int * type in the latter code, p essentially points to stack memory and does not need to be freed later. Therefore, the stack memory and the heap memory can be distinguished by designing and identifying the statuses of the memory block in this manner, so that classification into the pointer variable and the non-pointer variable does not need to be considered.

For the summary information, pointers that are in an analysis unit and that are associated with a formal parameter, a global variable, and a return value may each have one piece of summary information. The summary information of all the pointers that are in the analysis unit and that are associated with the formal parameter and the return value forms summary information of the analysis unit. Summary information of a pointer may be used to describe statuses present when a memory block to which the pointer points enters an analysis unit in which the pointer is located and exits the analysis unit. For example, the pointer associated with the formal parameter, the global variable, and the return value may include one or more of a pointer that is related to the formal parameter and the return value and that is brought in or brought out of the analysis unit, or a global variable, or a pointer that is brought in or brought out of the analysis unit by the global variable.

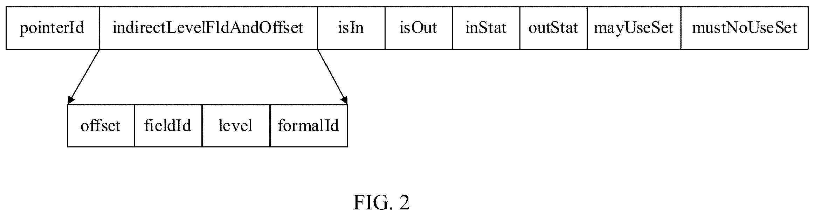

For example, FIG. 2 is a diagram of a data structure of summary information according to an embodiment of this application. As shown in FIG. 2, the summary information may include a pointerId field, an indirectLevelFldAndOffset field, an isIn field, an isOut field, an inStat field, an outStat field, a mayUseSet field, and a mustNoUseSet field.

The pointerId field is used to provide a unique ID number for each pointer for distinguishing.

The indirectLevelFldAndOffset field includes four parts: offset, fieldId, level, and formalId, which are used to distinguish multi-level pointers and structure members. offset indicates an offset of a memory area to which a pointer points. For example, if int p = malloc (100) points to a start address of a memory block, and int q = p+1, an offset value of q is 1, indicating that q points to a location at which an offset of the memory area is 1 byte. fieldId indicates field information. For example, if Struct S {int* a, int* b} defines a structure S, and S p = malloc (100) points to a start address of a memory block, q = p.a indicates that q points to a location at which a field is a in the memory area. Based on the definition of S, an ID number of the field a can be deduced, and the ID number is filled in the fieldId field of q. level indicates a level of indirect memory access. For example, if int **p = malloc (100) points to a start address of a memory block, q = *p indicates that level-1 indirect access is performed on p. In this case, the level field of q is 1. If q = **p, it indicates that level-2 indirect access is performed. In this case, the level field of q is 2. formalId indicates a location of the pointer in a function parameter, and is used to connect a calling function and a called function. For example, in func(p, q), p is a 0^{th} pointer associated with a formal parameter. Therefore, the formalId field of p is 0. q is a 1^{st} pointer associated with the formal parameter. Therefore, the formalId field of q is 1.

The isIn field and the isOut field can be true or false. When the isIn field is true, it indicates that a memory area to which a pointer points enters an analysis unit. When the isOut field is true, it indicates that the memory area to which the pointer points exits the analysis unit. In addition, the isIn field and the isOut field may be both true, indicating that the memory area to which the pointer points first enters the analysis unit and then exits the analysis unit. For example, the isIn field and the isOut field may be used to describe whether the memory area to which the pointer points enters or exits the analysis unit, or whether the memory area enters and exits the analysis unit. For example, code of an analysis unit is as follows:

| |
|---|
| ```
 int *func(int *p, int *q) {
    return p;
 } // p: isIn = true, and isOut = true; and q: isIn = true, and isOut = false
``` |

In the code, a memory block to which the pointer p points enters the analysis unit and exits the analysis unit. Therefore, both the isIn field and the isOut field in summary information of the pointer p are true.

For the inStat field and the outStat field, when isIn is true, inStat indicates a memory block status present when a memory area, to which the pointer points, enters the analysis unit. When isIn is false, the inStat field is an initial value, namely, kUninitialized. When isOut is true, outStat indicates a memory block status present when the memory area, to which the pointer points, exits the analysis unit. When isOut is false, the outStat field is the initial value, namely, kUninitialized. For example, code of an analysis unit is as follows:

| |
|---|
| ```
 int *func(int *p, int *q) {
    *p = 5; // If a memory area to which p points is loaded, the memory area should be in the
 kAllocated state when entering the analysis unit
    *q = 10; // If a memory area to which q points is loaded, the memory area should be in the
 kAllocated state when entering the analysis unit
    r = malloc (100); // If a memory area to which r points is allocated, the memory area is in
 the kAllocated state
    return r; // The memory area should be in the kAllocated state when exiting the analysis
 unit
 } // p: isIn = true, isOut = false, inStat = kAllocated, and outStat = kUninitialized; q: isIn =
 true, isOut = false, inStat = kAllocated, and
outStat = kUninitialized; and r: isIn = false, isOut
 = true, inStat = kUninitialized, and outStat = kAllocated
``` |

In the code, a memory block to which the pointer p points only enters the analysis unit, and memory is allocated to the memory block before the memory block enters the analysis unit. Therefore, in summary information of the pointer p, the isIn field is true, the isOut field is false, inStat is kAllocated, and outStat is kUninitialized. A memory block to which the pointer q points also only enters the analysis unit, and memory is allocated to the memory block before the memory block enters the analysis unit. Therefore, in summary information of the pointer q, the isIn field is true, the isOut field is false, inStat is kAllocated, and outStat is kUninitialized. A memory block to which the pointer r points only exits the analysis unit, and memory is allocated to the memory block before the memory block exits the analysis unit. Therefore, in summary information of the pointer r, the isIn field is false, the isOut field is true, inStat is kUninitialized, and outStat is kAllocated.

mayUseSet is used to record pointerIds of all pointers that have an alias relationship with a pointer, and may be obtained by executing an alias analysis algorithm (for example, the Anderson's algorithm or the steensgaard's algorithm) on code in a single analysis unit. For example, code of an analysis unit is as follows:

| |
|---|
| ```
 int func(int *p) {
    int *q = p; // There is an alias relationship between q and p
    *q = 10;
    int *r = q; // There is an alias relationship between r and q
    return *r;
 } // If pointerId of p is 1, pointerId of q is 2,
and pointerId of r is 3, the mayUseSet field of p is
 {2,3}, the mayUseSet field of q is {1,3}, and the mayUseSet field of r is {1,2}
``` |

In the code, if pointerId of p is 1, pointerId of q is 2, and pointerId of r is 3, the mayUseSet field of p is {2,3}, the mayUseSet field of q is {1,3}, and the mayUseSet field of r is {1,2}.

mustNoUseSet is used to record pointerIds of all pointers that do not have an alias relationship with a pointer. If a memory area to which a pointer points is freed in an analysis unit and a memory area to which another pointer points is used, it needs to be determined that the two memory areas do not have an alias relationship when entering the analysis unit (otherwise, use after free occurs in the two memory areas). For example, code of an analysis unit is as follows:

| |
|---|
| ```
 void func(int *p, int *q) {
     free (p); // A memory area to which p points is freed
     *q = 10; // A memory area to which q points is then used
 } // If pointerId of p is 1 and pointerId of q is 2, the mustNoUseSet field of p is {2}, and
 because the alias relationship is bidirectional, the mustNoUseSet field of q is {1}
``` |

In the code, if pointerId of p is 1 and pointerId of q is 2, the mustNoUseSet field of p is {2}. Because the alias relationship is bidirectional, the mustNoUseSet field of q is {1}.

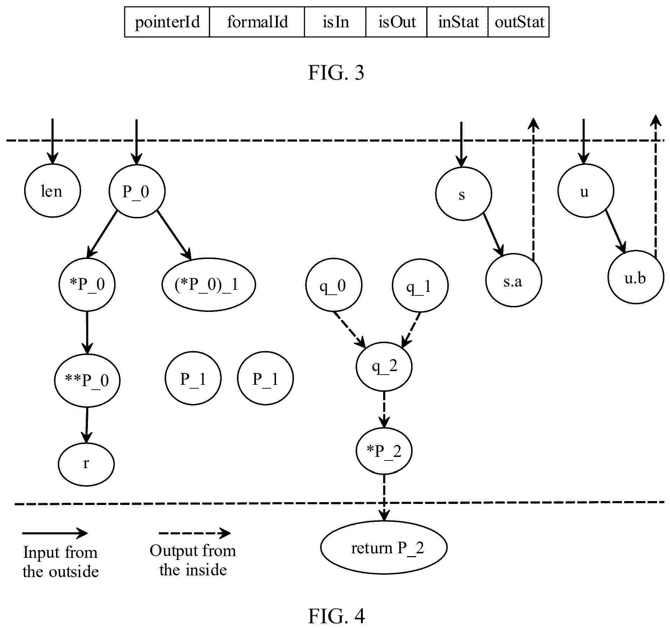

It should be understood that FIG. 2 shows only one form of the data structure of the summary information. In another embodiment, the data structure of the summary information may alternatively be in another form, or may include more or fewer fields. This may be specifically determined based on an actual situation, and is not limited herein. For example, the data structure of the summary information may alternatively be shown in FIG. 3. In FIG. 3, the data structure of the summary information may include a pointerId field, a formalId field, an isIn field, an isOut field, an inStat field, and an outStat field.

In this embodiment, the summary generation module 120 may include a plurality of input/output pointer extraction modules 121, a plurality of summary initialization modules 122, and a plurality of local analysis modules 123. One input/output pointer extraction module 121, one summary initialization module 122, and one local analysis module 123 are jointly responsible for processing one analysis unit. Because the memory behavior of different analysis units is decoupled in the program division phase, the call relationship between the analysis units may be directly ignored in a process of processing the analysis units, and a plurality of analysis units may be processed in parallel. This improves processing efficiency, and reduces analysis time.

The input/output pointer extraction module 121 is mainly responsible for extracting the pointers that are in the analysis unit and that are associated with the formal parameter, the global variable, and the return value, to subsequently generate the summary information by using these pointers. The input/output pointer is the pointer associated with the formal parameter, the global variable, and the return value, and may enter and exit the analysis unit based on the formal parameter, the global variable, or the return value. For example, before extraction, an IR with an ssa feature of the analysis unit may be first obtained from an IR with an ssa feature in the source code obtained by the compiler. Then, the formal parameter and the return value of the analysis unit may be extracted from the IR with the ssa feature of the analysis unit, and then analysis is performed based on a constraint relationship (for example, assignment, memory loading, and function calling), to extract the pointer associated with the formal parameter, the global variable, and the return value, and an entry or exit direction of each pointer is specified. For example, code of an analysis unit is as follows:

| |
|---|
| ```
 struct st
 {
     int *a;
     int *b;
 };
 st u; // global variable
 int** func(int len, int **p, st s) { //: formal parameter
len, p_0 (ssa version and initial version
 of p), s, and global variable u
     u.b = 5; // u.b enters the analysis unit through u and exits the analysis unit through u
     s.a = 10; // s.a enters the analysis unit through s and exits the analysis unit through s
     int r = **p; // *p_0 enters the analysis unit through p_0, **p_0 enters the analysis unit
 through p_0, and r is defined
     *p = malloc(len); // (*p_0) _1 (ssa version, and *p_0 has a new version) is defined
     p = malloc(r); // p_1 (ssa version, and p has a new version) is defined
     *p = malloc(100); // *p_1 is defined
     bool flag = xxx;
     int *q = malloc(100); // q_0 (ssa version and initial version of q) is defined
     if (flag) {
        q = malloc(200); // q_1 (ssa version, and q has a new version) is defined
     }
     p = malloc(300); // p_2 (ssa version, and p has a new version) is defined
     // A phi node is inserted here; q_2 = phi(q_0, q_1); and q_2 (ssa version, and q has a new
 version) is defined
     *p = q; // *p_2 is defined
     return p; // return value p_2, passed to the analysis unit
 }
 
``` |

In the code, the formal parameter, the global variable, and the return value, namely, len, p_0, s, and p_2, may be first extracted based on the function descriptions, where len, p_0, and s are the formal parameters, u is the global variable, and p_2 is the return value. Then, all statements in the functions are traversed, and a constraint relationship between the pointers is identified, to construct an in-out graph (in-out graph) shown in FIG. 4. In FIG. 4, all variables (len, p_0, *p_0, **p_0, s, s.a, and u.b) connected in series by solid arrows enter the analysis unit, and all variables (*(p_0)_1, q_0, q_1, q_2, *p_2, p_2, s.a, and u.b) connected in series by dashed arrows exit the analysis unit. In some embodiments, in addition to extracting the input/output pointer by using the in-out graph, the input/output pointer may be extracted by performing recursive backtracking on the formal parameter, the global variable, and the return value, or may be extracted by using an assignment graph in a static value-flow (static value-flow, SVF) solution. This may be specifically determined based on an actual situation, and is not limited herein.

The summary initialization module 122 is mainly responsible for initializing the summary information of the input/output pointer extracted by the input/output pointer extraction module 121 from the analysis unit. The summary initialization module 122 may initialize one piece of summary information for each input/output pointer.

For example, the data structure of the summary information shown in FIG. 2 is used as an example. Any input/output pointer may be identified by using the pointerId field in summary information of the pointer. Different input/output pointers have different pointerIds. Then, in the summary information of the pointer, the indirectLevelFldAndOffset field may be filled based on an analysis result of the input and output parameter extraction module 121. For example, still refer to FIG. 4. In the indirectLevelFldAndOffset field in the summary information of p_0, level = 0, offset = 0, fieldId = 0, and formalId = 1; in the indirectLevelFldAndOffset field in the summary information of *p_0, level = 1, offset = 0, fieldId = 0, and formalId = 1; in the indirectLevelFldAndOffset field in the summary information of **p_0, level = 2, offset = 0, fieldId = 0, and formalId = 1; in the indirectLevelFldAndOffset field in the summary information of s, level = 0, offset = 0, fieldId = 0, and formalId = 2; in the indirectLevelFldAndOffset field in the summary information of s.a, level = 1, offset = 0, fieldId = 1, and formalId = 2; and in the indirectLevelFldAndOffset field in the summary information of u.b, level = 1, offset = 0, fieldId = 2, and formalId = 3. Then, values are assigned to the isIn field and the isOut field. When the pointer enters the analysis unit based on the formal parameter or the global variable, the isIn field can be set to true. When the pointer exits the analysis unit based on the formal parameter or the return value, the isOut field is set to true. When the pointer can enter the analysis unit and exit the analysis, the isIn field can be set to true, and the isOut field can also be set to true. Finally, in the summary information of the pointer, the inStat field and the outStat field may be initialized to kUninitialized, and the mayUseSet field and the mustNoUseSet field may be initialized to null. It should be understood that time for initializing content of different fields in the summary information may be determined based on an actual situation, and is not limited herein.

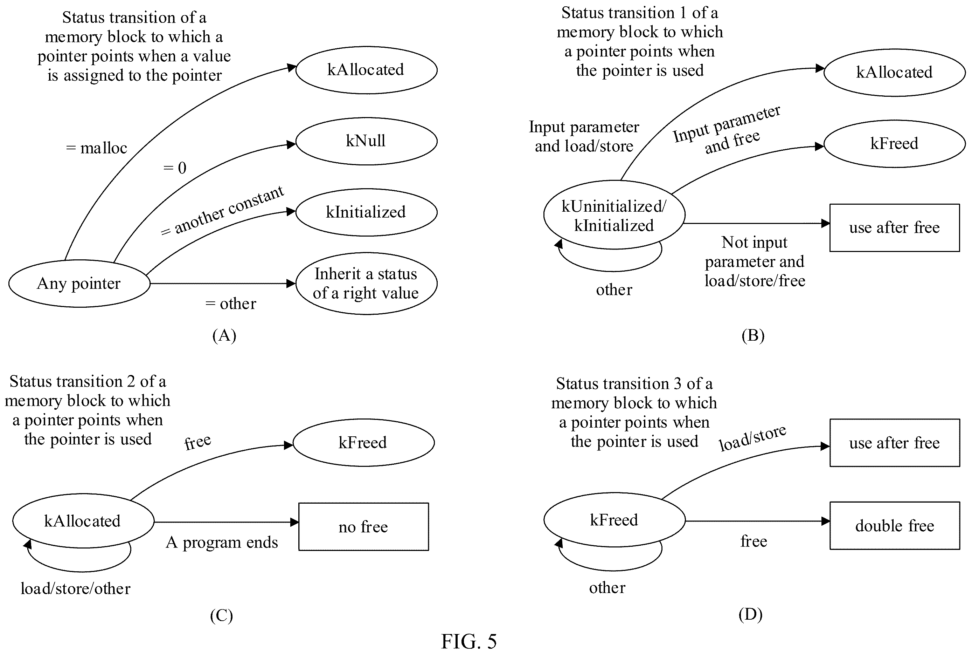

The local analysis module 123 is mainly responsible for obtaining a control flow graph (control flow graph, CFG) of the analysis unit from the IR with the ssa feature of the analysis unit. In addition, the local analysis module 123 is further responsible for traversing the IR along the CFG to obtain statements, performing status analysis on all pointers in the statements, identifying, based on status analysis results, a code line having a time-type memory problem, and updating the inStat field and the outStat field in the summary information obtained by the summary initialization module 122 through initialization. For status analysis, (A) in FIG. 5 shows status transition of a memory block to which a pointer points when a value is assigned to the pointer, and (B), (C), and (D) in FIG. 5 each show status transition of a memory block to which a pointer points when the pointer is used. In (A) in FIG. 5, after memory is allocated to a pointer, a state of a memory block to which the pointer points changes to kAllocated. When a value 0 is assigned to the pointer, the state of the memory block to which the pointer points changes to kNull. When a non-zero constant is assigned to the pointer, the state of the memory block to which the pointer points changes to kInitialized. When "other" is assigned to the pointer, the status of the memory block to which the pointer points inherits a status of a right value. For example, for a pointer p, when p = malloc(), a state of a memory block to which p points changes to kAllocated. When p = 0, the state of the memory block to which p points changes to kNull. When p = 5, the state of the memory block to which p points changes to kInitialized. When p = q, the status of the memory block to which p points changes to a status of a memory block to which q points.

In (B) in FIG. 5, when a pointer is used, and when a state of a memory block to which the pointer points is kUninitialized/kInitialized, if the pointer is an input parameter and the pointer is loaded or stored (load/store), the state of the memory block to which the pointer points changes to kAllocated. If the pointer is the input parameter and the memory to which the pointer points is freed, the state of the memory block to which the pointer points changes to kFreed. If the pointer is not the input parameter and the pointer is loaded or stored (load/store), or the memory to which the pointer points is freed, because the memory block to which the pointer points is not allocated, a problem of invalid memory use is caused, that is, the memory is used after being freed. If another operation is performed on the pointer, the status of the memory block to which the pointer points remains unchanged. For example, if p is an input parameter, when *p = x, a store operation is performed on a memory block to which p points, and a state of the memory block to which p points is changed to kAllocated. When x = *p, a load operation is performed on the memory block to which p points, and the state of the memory block to which p points changes to kAllocated. In a case of free(p), a free operation is performed on the memory block to which p points, and the state of the memory block to which p points changes to kFreed.

In (C) in FIG. 5, when a pointer is used, and when a state of a memory block to which the pointer points is kAllocated, if memory to which the pointer points is freed, the state of the memory block to which the pointer points changes to kFreed. If the program ends at this time, direct exit causes the memory to be not freed because the memory is allocated. As a result, a problem of memory leak is caused because the memory is not freed. If a load operation, a store operation, or another operation is performed on the memory block to which the pointer points, the status of the memory block to which the pointer points remains unchanged because the memory is allocated.

In (D) in FIG. 5, when a pointer is used, and a state of a memory block to which the pointer points is kFreed, if the memory to which the pointer points is freed again, a problem of double free is caused given that the memory block is already in the freed state. If the memory block to which the pointer points is loaded or stored, the memory block is used again. In this case, because the memory block is in the freed state, a problem of use after free is caused (namely, invalid memory use) is caused. If another operation is performed on the memory block to which the pointer points, the status of the memory block to which the pointer points remains unchanged.

It should be noted that kUninitialized, kInitialized, kAllocated, kNull, and kFreed in FIG. 5 all indicate that the memory block is being correctly used. When the state of the memory block is any one of the states, the state of the memory block may be referred to as an "intermediate state". In FIG. 5, use after free, double free, and no free all indicate that the memory block is not correctly used. When the state of the memory block is any one of the states, the state of the memory block may be referred to as a "terminated state". Use after free, double free, and no free may be referred to as types of the terminated state. One type of terminated state may correspond to one error report type. When the memory block is in the "terminated state", different types of terminated states may have different error report types and error report statements. For example, when the type of the terminated state is use after free, the error report type is use after free, and the error report statement is a memory use statement. When the type of the terminated state is double free, the error report type is double free, and the error report statement is a memory free statement. When the type of the terminated state is no free, the error report type is that memory is not freed (which may also be referred to as "memory leak"), and the error report statement is a memory allocation statement.

When analyzing the analysis unit, the local analysis module 123 analyzes the statements in the IR path by path and row by row based on the status transition diagram shown in FIG. 5, analyzes an execution status of each pointer in the statement, and identify the time-type memory problem in the analysis unit. For example, when a state of a memory block to which a pointer points is analyzed as no free, it may be determined that the pointer is in the terminated state. Further, the type of the terminated state is no free. Therefore, it may be determined that the error report type is that the memory is not freed, and the error report statement is the memory allocation statement of the pointer. In this way, a detection result of the pointer is obtained. When states of memory blocks to which other pointers in the analysis unit point are all intermediate states after the transfer, the local analysis module 123 may use the detection result obtained by the local analysis module 123 as a result of this analysis.

In some embodiments, when a current value of a variable in an analysis unit comes from a plurality of previous different branches in the analysis unit, the variable is processed by using a phi node in an IR with an ssa feature of the analysis unit. In this case, in an analysis process, the local analysis module 123 may directly complete error detection by storing and comparing statuses of variables in the phi node, to reduce path exploration space and improve analysis efficiency. If a storage result of a previous branch is inconsistent with a result obtained by performing status analysis by the current branch, an error is reported. When the error is reported, the error report type and the error report statement may be determined based on a conflict between statuses of memory blocks to which pointers passed from different branches point. For example, as shown in Table 1, when a recorded state of a memory block, to which a pointer p_0 passed from a branch points, is kUninitialized, kInitialized, or kFreed, if a state of a memory block, to which a pointer p_1 passed from a branch points, is kAllocated, the states corresponding to the two branches are inconsistent. Therefore, a conflict occurs. Further, it may be determined from Table 1 that the error report type is that the memory is not freed, and the error report statement is a memory allocation statement of p_1. When the recorded state of the memory block, to which the pointer p_0 passed from a branch points, is kAllocated, if the state of the memory block, to which the pointer p_1 passed from a branch points, is kUninitialized, kInitialized, or kFreed, the states corresponding to the two branches are inconsistent. Therefore, a conflict occurs. Further, it may be determined from Table 1 that the error report type is double free, and the error report statement is a memory free statement of p_0.

**Table 1**

| Recorded state of a branch (variable p_0) | State of a current branch (variable p_1) | Error report type | Error report statement |
|---|---|---|---|
| KUninitialized, kInitialized, or kFreed | kAllocated | Memory is not freed | Memory allocation statement of p_1 |
| kAllocated | KUninitialized, kInitialized, or kFreed | Double free | Memory free statement of p_0 |

Specifically, after completing exploration of a path, the local analysis module 123 may store a status of a variable in a phi node on the path in an exploration process. When the local analysis module 123 explores another path, the local analysis module 123 may separately explore a path before the phi node and a path after the phi node. When exploring a path before the phi node, the local analysis module 123 may compare a status of a variable in the phi node that is obtained through this exploration with a status of a variable in the phi node that is stored when the local analysis module 123 previously explores another path. When the two statuses are consistent, it indicates that the statuses of the variables in the exploration path are all correct, and no error needs to be reported. If the two statuses are inconsistent, a conflict occurs. In this case, an error is reported based on the error report type and error report statement in Table 1 and the status conflict on the branches. When exploring a path after the phi node, the local analysis module 123 may explore only a path that is not explored by the local analysis module 123, and does not need to explore a path that is explored. In this way, the path exploration space can be reduced and the analysis efficiency can be improved. For example, when exploring a path, the local analysis module 123 may traverse statements included in nodes on the path, and perform status analysis on a status of a memory block to which a pointer in a traversed statement points.

For example, code of an analysis unit is as follows:

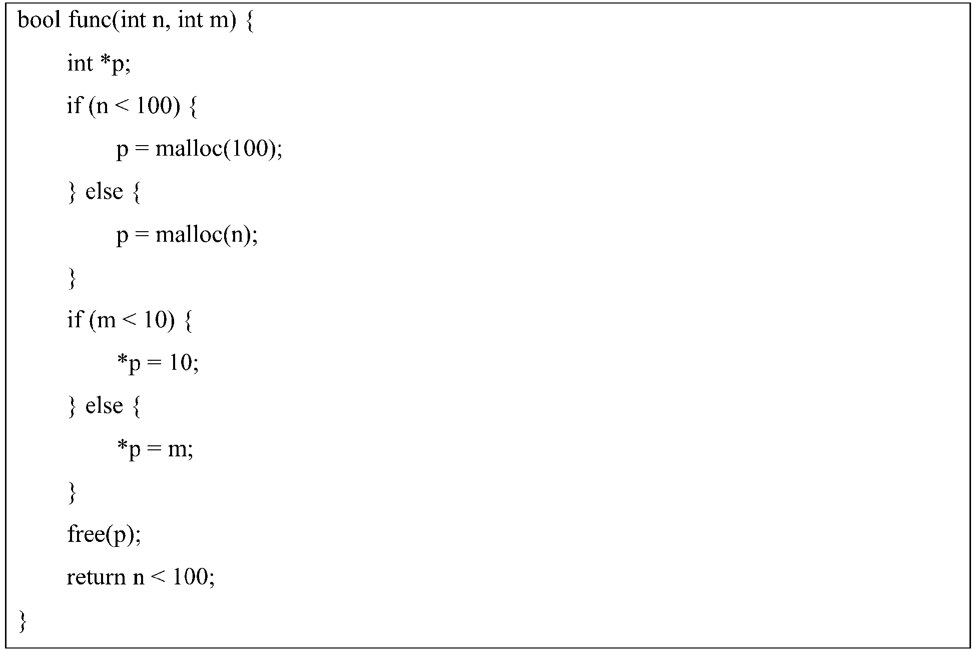

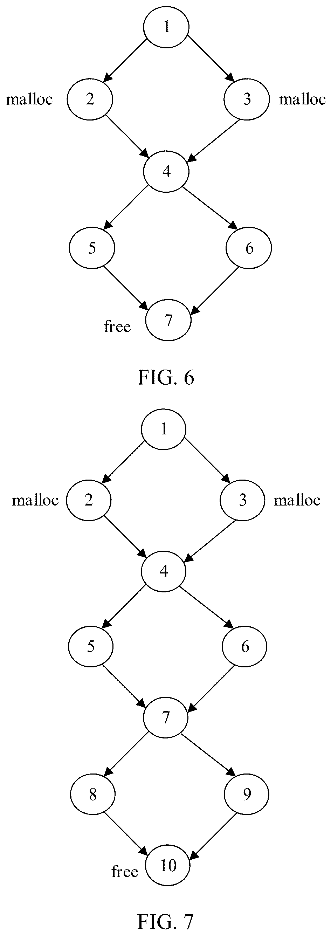

A CFG constructed based on the code may be shown in FIG. 6. It can be learned from FIG. 6 that, in the code, memory allocation occurs at a BB 2 and a BB 3, and memory free occurs at a BB 7. To ensure that memory use behavior on each path is valid, exploration processing needs to be separately performed on all four possible paths in the figure, and traversal is performed in a depth-first order: 12457, 12467, 13457, and 13467. In fact, after 12457 is explored, a node BB 4 may be directly rolled back (provided that a status of the node BB 4 is saved) and 467 is further explored without starting from a node 1 to explore 12467 again. After 12457 and 467 are explored, the node BB 1 is rolled back to explore to the node BB 4 along 134. Then, a status of the node BB 4 is compared with the previously stored status of the node BB 4, to determine whether 13457 and 13467 are reasonable. If it is found through a comparison result that the statuses are inconsistent, an error can be reported directly. The overall exploration process is simplified to 12457, 467, and 134, and the exploration space is reduced from twice per edge to once per edge.

A prerequisite for completing the simplified process is that the status of the node BB 4 can be stored and the statuses of the node BB 4 can be compared. p in the node BB 4 may be from the BB 2 or the BB 3. When p is processed, p in the BB 2 is renamed as p_1, p in the BB 3 is renamed as p_2 by using the ssa technology, and a statement p_3 = phi(p_1, p_2) is added to the BB 4 to indicate "p_3 = p_1 when the BB4 is entered through the BB 2; and p_3 = p_2 when the BB4 is entered through the BB 3". In a first step, when 12457 is traversed, a status of p_1 is obtained at the node BB 4 and is stored. In addition, a status of p_3 is the same as that of p_1 and is stored. In a second step, when 467 is traversed, the status of p_1, namely, p_3, at the node BB 4 is inherited. In a third step, when 134 is traversed, a status of p_2 is obtained and is compared with the previously recorded status of p_1. If the status of p_2 is different from the status of p_1, a conflict occurs, and an error is reported.

In addition, a larger quantity of original paths to be explored indicates that the path exploration space is reduced more obviously, and more obvious effect. For example, when a CFG constructed based on code of an analysis unit is shown in FIG. 7, there are eight original paths to be explored: 1-2-4-5-7-8-10, 1-2-4-5-7-9-10, 1-2-4-6-7-8-10, 1-2-4-6-7-9-10, 1-3-4-5-7-8-10, 1-3-4-5-7-9-10, 1-3-4-6-7-8-10, and 1-3-4-6-7-9-10. When both a BB 4 and a BB 7 store statuses of corresponding variables and compare the statuses of the variables, the paths to be explored become 4: 1-2-4-5-7-8-10, 7-9-10, 4-6-7, and 1-3-4. In addition, the path exploration space is reduced from four times per edge to once per edge.

In some embodiments, when a statement of an analysis unit A calls an analysis unit B, and subsequent code is executed based on a call result, if update of a summary of the analysis unit B is not completed, a subsequent analysis result and summary generation of the analysis unit A are affected given that the obtained summary information of the analysis unit B is inaccurate.

For example, code of the analysis unit A is as follows:

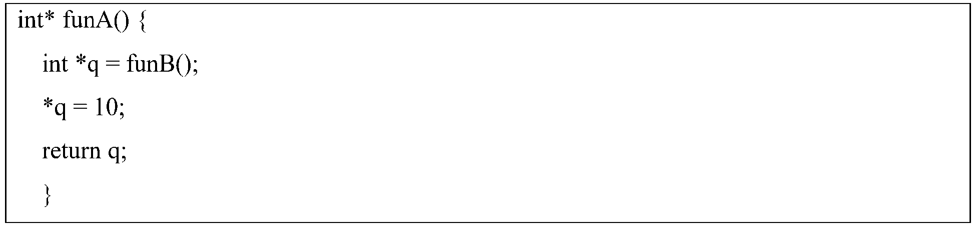

Code of the analysis unit B is as follows:

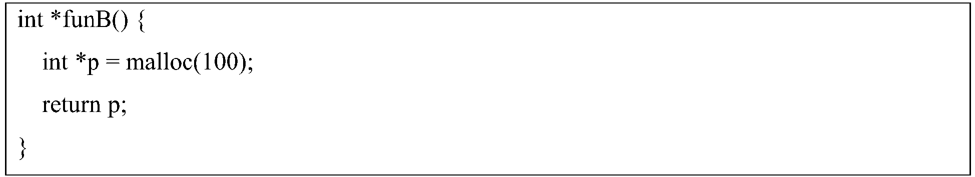

In the code, a statement in the analysis unit A calls the analysis unit B, and subsequent code is executed based on a call result. If update of a summary of the analysis unit B is not completed, when the local analysis module 123 configured to analyze the analysis unit A performs analysis, because the summary of funB() is null, "other" is assigned to q, and a state of a memory block to which q points is kInitialized. Then, a load operation is performed in the analysis unit A by using *q. It can be learned from the status transition diagram shown in FIG. 5 that an error occurs in status transition at this time. As a result, the error is reported. After the summary of the analysis unit B is updated, when the analysis unit A is analyzed, p is assigned to q. Therefore, the state of the memory block to which q points is the same as a state of a memory block to which p points in the summary of the analysis unit B, namely, kAllocated. Then, a load operation is performed in the analysis unit A by using *q. Because the memory is allocated to q, the load operation is correctly performed. It can be learned that, only when summary information of a callee (namely, a called analysis unit) does not change, correct summary information of a caller can be obtained, and a correct memory problem can be analyzed.

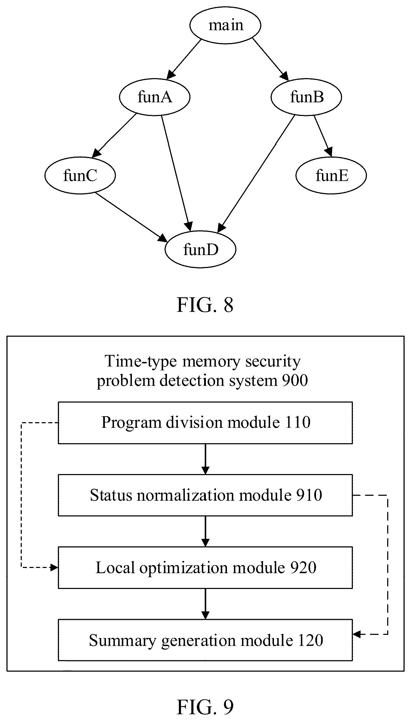

Therefore, to ensure that finally obtained summary information of each analysis unit is correct and ensure correctness of an analysis result, each local analysis module 123 may iteratively analyze a corresponding analysis unit. To obtain the correct summary information, a maximum quantity of iterations of the local analysis module 123 is a maximum quantity of call levels of the analysis unit in a function call graph (call graph) of the source code. Certainly, the maximum quantity of iterations may alternatively be greater than the maximum quantity of call levels. This may be specifically determined based on an actual situation, and is not limited herein. For example, as shown in FIG. 8, in a call graph shown in FIG. 8, neither an analysis unit funD nor an analysis unit funE calls another analysis unit. Therefore, maximum quantity of call levels of the two analysis units are both 0, that is, an iteration is not required when funD and funE are analyzed, and analysis is required once at most. An analysis unit funC directly calls the analysis unit funD and does not call another analysis unit. Therefore, a maximum quantity of call levels of the analysis unit funC is 1, that is, a maximum of one iteration is required when the analysis unit funC is analyzed. An analysis unit funA may directly call the analysis unit funD, or may indirectly call the analysis unit funD through the analysis unit funC. Therefore, a maximum quantity of call levels of the analysis unit funA is 2, that is, a maximum of two iterations are required when the analysis unit funC is analyzed. An analysis unit funB directly calls the analysis units funD and funE. Therefore, a maximum quantity of call levels of the analysis unit funB is 1, that is, a maximum of one iteration is required when the analysis unit funB is analyzed. An analysis unit main needs to call the analysis units funA and funB. Therefore, a maximum quantity of call levels of the analysis unit main is the maximum quantities of call levels of funA and funB plus 1, namely, 3. To be specific, a maximum of three iterations are required when main is analyzed.

It should be understood that, in this embodiment, because the memory behavior of the analysis units is decoupled by using the summary technology, the call sequence between the analysis units may be directly ignored, and memory problem analysis is simultaneously performed on all the analysis units. In this way, the analysis time is reduced, and the analysis efficiency is improved. In addition, because the memory behavior of the analysis unit is fixed, the summary information of the corresponding analysis unit may be directly called during subsequent calling, and the corresponding analysis unit does not need to be opened. This reduces operation overheads and avoids an exponential increase in operations. For example, as shown in FIG. 8, main, funA, funB, funC, funD, and funE may be simultaneously analyzed in a first round, although only correct summary information of funD and funE is obtained in this round. In a first iteration, all the functions are simultaneously analyzed on the premise that the correct summary information of funD and funE is obtained. In this case, correct summary information of funB and funC can be obtained. The iteration is repeated until all correct summary information is obtained in a third iteration. It should be noted that, because all the analysis units are analyzed in each round, there is no need to construct a call graph (call graph) similar to that in FIG. 8, there is no need to know specific functions whose summary information is correct in each round, and whether an iteration is required can be determined based on whether all summary information obtained in this round is updated compared with all summary information obtained in a previous round. When the summary is no longer updated, a new iteration cannot bring any benefit.

In some embodiments, to ensure correctness of the finally obtained summary information of each analysis unit, when the summary information of all the analysis units is no longer updated, it may be determined that correct summary information of all the analysis units is obtained. In addition, an identified memory problem can be output as a final detection result. For example, the final detection result may include one or more of the following: a module having the time-type memory problem, a code line having the time-type memory problem, a column of a pointer having the time-type memory problem in the source code, and an execution path from a memory allocation point having the time-type memory problem to an error report point. The error report point includes a memory use point or a memory free point.

The foregoing describes the time-type memory problem detection system 100 provided in this embodiment of this application. In an actual operation, when a plurality of different branches in the analysis unit point to a same node, if statuses of memory blocks to which pointers passed from these branches point are not unique, incorrect summary information is easily generated, and a false report is easily caused. In addition, redundant paths often exist in the analysis unit, and these redundant paths often affect the analysis result. In view of this, an embodiment of this application provides another time-type memory problem detection system.

For example, FIG. 9 is a diagram of an architecture of another time-type memory problem detection system according to an embodiment of this application. As shown in FIG. 9, the time-type memory problem detection system 900 may include the program division module 110 and the summary generation module 120 that are described in FIG. 1, and a status normalization module 910 and a local optimization module 920. There may be a plurality of status normalization modules 910 and a plurality of local optimization modules 920. One status normalization module 910 may be configured to process one analysis unit, and one local optimization module 920 may also be configured to process one analysis unit.

The status normalization module 910 is mainly responsible for normalizing, when a plurality of different branches in a CFG of an analysis unit point to a same node, statuses of memory blocks to which pointers passed from these branches point. When a pointer is a null pointer, a status of a memory block to which the pointer points may be defined as any status.

For example, code of an analysis unit is as follows:

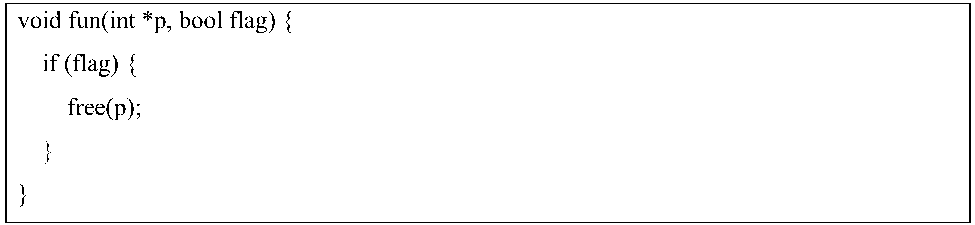

In the CFG obtained based on the code, two branches in the if statement point to a same node. However, in the if statement, when flag = true, a state of a memory block, to which a pointer p passed from a branch points, is kFreed. When flag = false, a state of a memory block, to which a pointer p passed from a branch points, is kAllocated. It can be learned that the statuses of the memory blocks, to which the pointers passed from the two branches in the if statement point, are inconsistent. Therefore, the statuses of the memory blocks to which the pointers p in the analysis unit point are not unique. In this case, in the code, status normalization can be implemented by converting a wild pointer into a null pointer. The code obtained through conversion is as follows:

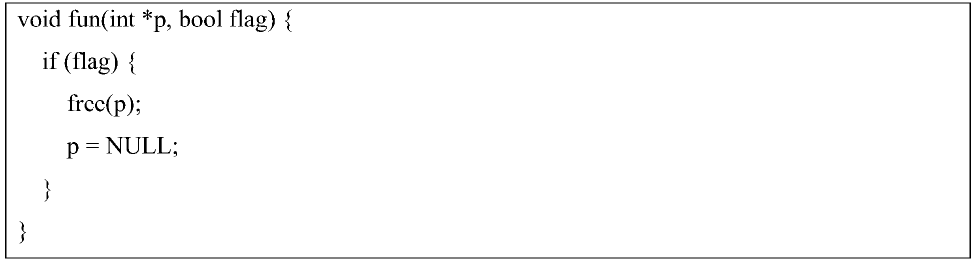

Invalid use of the null pointer is a common space-type memory security problem, which can be resolved by adding check during running of the null pointer. On this basis, in this embodiment, a problem of the invalid use of the null pointer is considered to be resolved by default, and a status of a memory block to which the null pointer points may be considered as being equivalent to any status. It can be learned from the converted code that the states of the memory blocks, to which the pointers passed from the two branches in the if statement point, are both kFreed.

It should be understood that, in addition to automatically performing status normalization, the status normalization module 910 may further notify a developer of information indicating that the statuses are not unique when the plurality of branches jointly point to the same node and the statuses of the memory blocks, to which the pointers passed from these branches point, are not unique. In this way, the developer implements status normalization by standardizing use of a function interface constraint pointer.

For example, as shown below, input parameters p of a realloc function are in the kAllocated, kFreed, and kAllocated states when being passed from three branches. As a result, the states are not unique. The information can be notified to the developer, and the developer determines how to handle this.

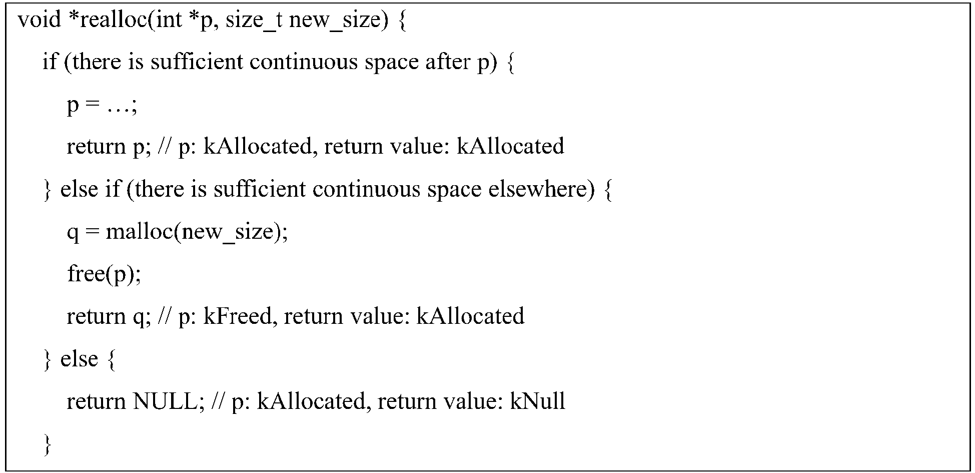

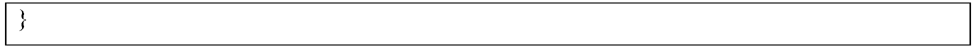

The local optimization module 920 is mainly configured to eliminate the redundant path in the analysis unit by using an IR with an ssa feature of the analysis unit, to reduce false and missing report rates during subsequent analysis. For example, when there is a redundant unreachable path, if use after free occurs on the unreachable path, the unreachable path may be considered as a reachable path. In this case, an error is reported. Eliminating the redundant path may include one or more of eliminating redundant reachability determining, eliminating an unreachable path, and eliminating redundant function expansion. The following separately describes elimination of the redundant reachability determining, elimination of the unreachable path, and elimination of the redundant function expansion.

### (1) Eliminate the redundant reachability determining

For the elimination of the redundant reachability determining, when there are both a dominance relationship and a post-dominance relationship between a memory allocation point and a memory free point, it may be determined that memory behavior between the two points is reasonable, and reachability determining does not need to be performed on a plurality of paths in an intermediate process. Therefore, when there are both a dominance relationship and a post-dominance relationship between an allocation point and a free point of a memory block to which a pointer points, it can be marked that reachability determining does not need to be performed on the memory block. In this way, it can be directly determined subsequently that the paths between the allocation point and the free point of the memory block are all reachable, and the paths between the allocation point and the free point of the memory block do not need to be sequentially determined, thereby improving analysis efficiency.

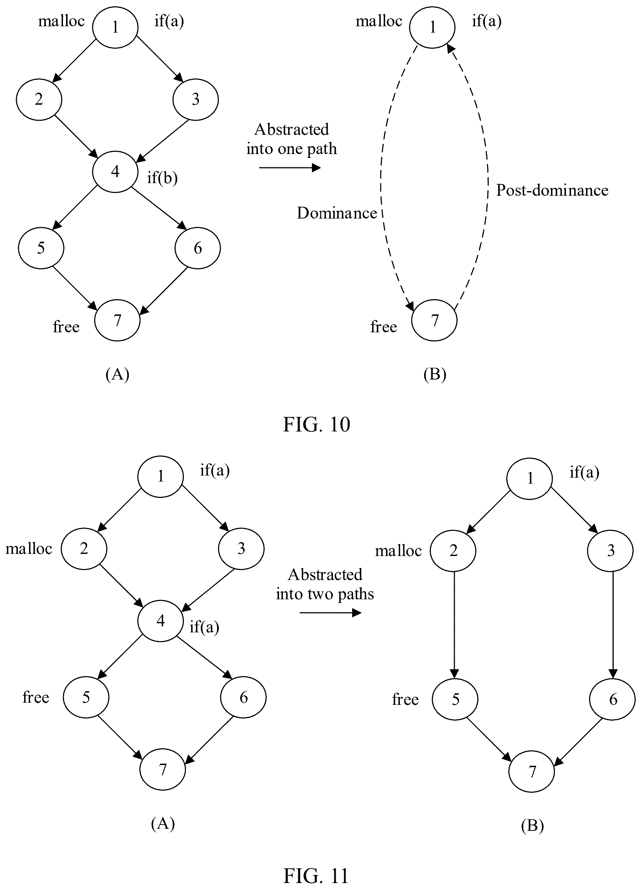

For example, (A) in FIG. 10 shows a CFG of an analysis unit. Each node indicates a BB. Memory allocation behavior is performed at a BB 1, and memory free behavior is performed at a BB 7. In addition, after the BB 1, two branches BB 2 and BB 3 are separately reached through determining of a condition a. After convergence at a BB 4, two branches BB 5 and BB 6 are separately reached through determining of a condition b. Finally, convergence at the BB 7 is performed. The entire process may be considered as four paths: BB 1→BB 2→BB 4→BB 5→BB 7, BB 1→BB 2→BB 4→BB 6→BB 7, BB 1→BB 3→BB 4→BB 5→BB 7, and BB 1→BB 3→BB 4→BB 6→BB 7. To determine whether memory allocation, use, and free on each path are reasonable, reachability of the four paths needs to be separately determined. According to the CFG, the BB 7 should pass through starting from the BB 1 (the BB 1 dominates the BB 7), and the BB 1 should pass through to reach the BB 7 (the BB 7 post-dominates the BB 1). Therefore, a memory allocation, use, and free sequence is reasonable, and analysis can be performed without the reachability determining. The reachability is directly determined based on the dominance relationship and the post-dominance relationship, and the original four paths may be directly considered as one path for determining, as shown in (B) in FIG. 10. Then, a statement on the path is analyzed.

### (2) Eliminate the unreachable path

For the elimination of the unreachable path, when there are some branches that are definitely unreachable in the analysis unit, a customized compilation technology can be used to find and eliminate the branches. These scenarios include determining whether a single condition like if(flag) or while(flag) is always true or false, and determining whether two conditions such as if(a) ---- if(b) are always the same. The customized technology mainly includes two parts: a value range propagation (value range propagation, VRP) algorithm used to calculate and propagate a value range of a variable, and a simplify control flow graph (simplify CFG) algorithm used to perform simplified elimination on a CFG.

For code of a "if(i<n) A; else B;" type, the VRP algorithm may be used to solve and propagate a value range of a determining object i in the conditional statement, to determine satisfiability of the determining condition i<n. If the condition i<n is definitely satisfied, the simplify CFG algorithm is used to eliminate a branch B. If the condition i<n is definitely not satisfied, the simplify CFG algorithm is used to eliminate a branch A. Otherwise, no processing is performed.

For code of a "while(i<n) A;" type, the VRP algorithm may be used to solve and propagate a value range of a determining object i in the conditional statement, to determine satisfiability of the determining condition i<n. If i<n is definitely not satisfied, the simplify CFG algorithm is used to eliminate a branch A. Otherwise, no processing is performed.

For code of a "if(a) A; else B; if(b) C; else D;" type, the VRP algorithm may be used to solve and propagate value ranges of a determining object a and a determining object b in the conditional statement, to determine satisfiability of a == b. If a == b is definitely satisfied, the simplify CFG algorithm is used to connect branches A-C and B-D. If a == b is definitely not satisfied, the simplify CFG algorithm is used to connect branches A-D and B-C. Otherwise, no processing is performed.

For example, (A) in FIG. 11 shows a CFG of an analysis unit. Each node indicates a BB, and both a BB 1 and a BB 4 use a condition a to perform branch determining. It can be learned through analysis that there are four paths in the figure: BB 1→BB 2→BB 4→BB 5→BB 7, BB 1→BB 2→BB 4→BB 6→BB 7, BB 1→BB 3→BB 4→BB 5→BB 7, and BB 1→BB 3→BB 4→BB 6→BB 7. However, BB 1→BB 2→BB 4→BB 6→BB 7 and BB 1→BB 3→BB 4→BB 5→BB 7 are definitely unreachable. Therefore, reachability determining does not need to be performed. It can be learned based on the VRP algorithm that the determining condition in the BB 1 is the same as the determining condition in the BB 4. It is learned through determining at the BB 4 that the branch BB 1→BB 2 definitely reaches the BB 5 and cannot reach the BB 6. The simplify CFG algorithm can be used to change the CFG of the analysis unit based on the foregoing conclusion, that is, the BB 4 is deleted, the BB 2 directly points to the BB 5, and the BB 3 directly points to the BB 6. In this way, subsequent work such as summary generation and code generation can be completed based on the new CFG, thereby reducing a quantity of paths to be determined subsequently and improving analysis efficiency.

### (3) Eliminate the redundant function inline (inline)

For function expansion that eliminates redundancy, when a function call result is used as a determining condition and affects reachability analysis, function inline (namely, inline, expanding a function body here) may be performed; or when a function call result is not used as a determining condition and does not affect reachability analysis, inline is not performed.

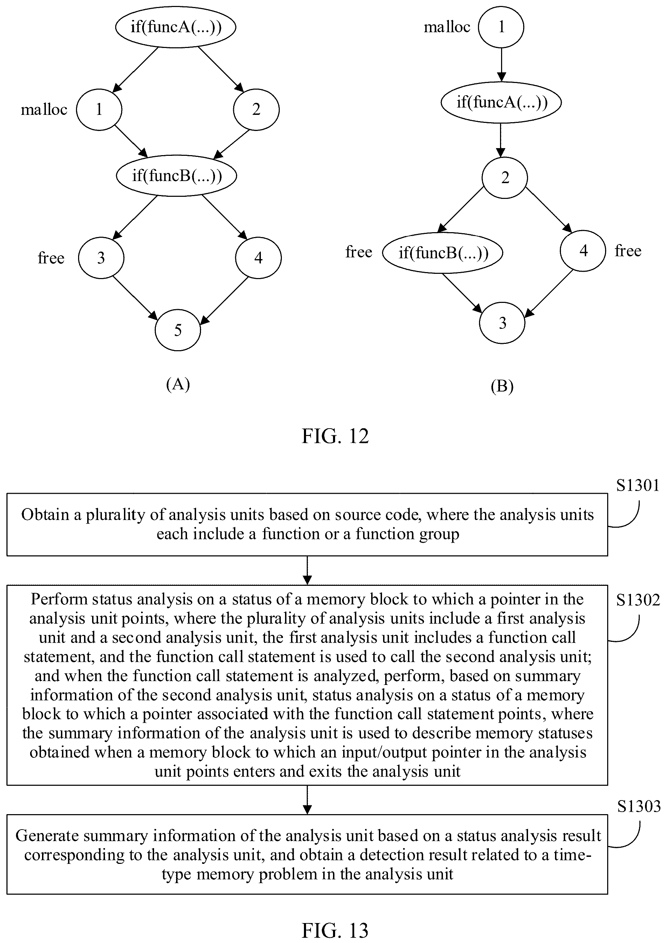

For example, (A) in FIG. 12 shows a CFG of an analysis unit, and each node indicates a BB. In the analysis unit, memory allocation and free occur at a BB 1 and a BB 3 respectively, and reachability of a path if(funcA(...))→BB 1→if(funcB(...))→BB 3 needs to be determined. The reachability depends on whether a return value result of the function funcA(...) is the same as a return value result of the funcB(...). Therefore, inline expansion needs to be performed to determine the result.

(B) in FIG. 12 shows a CFG of an analysis unit, and each node indicates a BB. In the analysis unit, memory allocation and free occur at the BB 1 and a BB 4 respectively. To ensure that use after free does not occur, that no memory is freed at funcA(...) needs to be determined. To ensure that no memory leak occurs, that memory is freed at funcB(...) needs to be determined. Memory behavior can be determined based on a function summary, and inline expansion does not need to be performed. In addition, once inline is performed, a quantity of paths increases (for example, after funcA is expanded, there are four paths given that funcB(...) and the BB 4 are two paths subsequently, and the entire CFG becomes eight paths (4 x 2)). This increases workload of the reachability determining and brings a risk of a false report (if the reachability determining is unclear, the false report is caused).

It should be understood that, in the time-type memory problem detection system 900 shown in FIG. 9, either the status normalization module 910 or the local optimization module 920 may be selected, or both the status normalization module 910 and the local optimization module 920 may be selected. This may be specifically determined based on an actual situation, and is not limited herein.

The foregoing describes the time-type memory problem detection system provided in embodiments of this application. The following describes, based on the foregoing content, a time-type memory security detection method provided in an embodiment of this application. For a part or all of content in the method, refer to the foregoing descriptions of the time-type memory problem detection system.

For example, FIG. 13 is a schematic flowchart of a time-type memory security detection method according to an embodiment of this application. It may be understood that the method may be performed by any apparatus, device, platform, or device cluster having computing and processing capabilities. As shown in FIG. 13, the time-type memory security detection method may include the following steps.

S1301: Obtain a plurality of analysis units based on source code, where the analysis unit includes a function or a function group.

In this embodiment, when time-type memory problem analysis is performed on the source code, the plurality of analysis units may be first obtained based on the source code, for example, the source code is divided. In this way, memory behavior of the analysis units is decoupled, so that a call sequence between the analysis units can be ignored during subsequent analysis. The analysis units each may include a function or a function group. For example, for details of the step, refer to the foregoing descriptions of the program division module 110 in the time-type memory problem detection system. Details are not described herein again.

S1302: Perform status analysis on a status of a memory block to which a pointer in the analysis unit points, where the plurality of analysis units include a first analysis unit and a second analysis unit, the first analysis unit includes a function call statement, and the function call statement is used to call the second analysis unit; and when the function call statement is analyzed, perform, based on summary information of the second analysis unit, status analysis on a status of a memory block to which a pointer associated with the function call statement points, where the summary information of the analysis unit is used to describe memory statuses present when a memory block to which an input/output pointer in the analysis unit points enters and exits the analysis unit.

In this embodiment, after the plurality of analysis units are obtained, for any analysis unit, status analysis may be performed on a status of a memory block to which a pointer in the analysis unit points. When a function call statement included in an analysis unit is analyzed, summary information of an analysis unit called by the function call statement may be used, to perform status analysis on a status of a memory block to which a pointer (for example, a pointer to which a value is assigned by the function call statement, or a pointer used by the function call statement) associated with the function call statement points. The input/output pointer may be a pointer associated with a formal parameter, a global variable, and a return value. For example, there is a function call statement p = funB() in an analysis unit A. In this case, a status of a memory block to which a return value of an analysis unit B points is directly used as a status of a memory block to which p points. For example, the summary information of the analysis unit is used to describe the memory statuses present when the memory block to which the input/output pointer in the analysis unit points enters and exits the analysis unit. For example, the summary information of the second analysis unit may be, but is not limited to, obtained in advance.

In this embodiment, the summary information of the analysis unit includes the summary information of the input/output pointer in the analysis unit. When the input/output pointer includes a second pointer, summary information of the second pointer may include one or more of the following: an identifier of the second pointer, a location of a formal parameter, a global variable, or a return value associated with the second pointer in the analysis unit, a relationship between the second pointer and a formal parameter, a global variable, and a return value in the analysis unit, a status present when a memory block to which the second pointer points enters or exits the analysis unit, or alias and non-alias relationships between the second pointer and a pointer other than the second pointer in the input/output pointer in the analysis unit. For a data structure of the summary information, refer to the descriptions in FIG. 2 or FIG. 3. Details are not described herein again. In some embodiments, when status analysis is performed, for the first time, on a status of a memory block to which a pointer in an analysis unit points, the status of the memory block to which the pointer points in summary information of the analysis unit may be null or an initial value. This may be specifically determined based on an actual situation, and is not limited herein.

In a possible implementation, when status analysis is performed on the status of the memory block to which the pointer in the analysis unit points, statements in the analysis unit are traversed according to a preset status transition rule, and status analysis is performed on the status of the memory block to which the pointer in the analysis unit points. For example, the status transition rule may be the status transition rule shown in FIG. 5. The status transition rule may be used to describe a status change rule of a memory block to which a pointer points when a value is assigned to the pointer or the pointer is used. For example, for a process of performing status analysis according to the status transition rule, refer to the related descriptions in FIG. 5. Details are not described herein again. In addition, in this manner, in an analysis process, a memory allocation point, a memory free point, and a memory use point can be identified by using a function statement, so that time-type memory problems related to the memory use point can be resolved, for example, double free and use after free.

In another possible implementation, before performing status analysis on the status of the memory block to which the pointer in the analysis unit points, a value stream map indicating a relationship between pointers in the analysis unit may alternatively be constructed first. The memory allocation point and the memory free point are identified on the value stream map. Then, status analysis may be performed on the status of the memory block to which the pointer in the analysis unit points by using the value stream map, or by using the value stream map and a CFG. However, because it is difficult to identify the memory use point in this manner, it is difficult to identify the time-type memory problem of double free and use after free in this manner.

S1303: Generate summary information of the analysis unit based on a status analysis result corresponding to the analysis unit, and obtain a detection result related to a time-type memory problem in the analysis unit.

In this embodiment, after status analysis on the memory block to which the pointer in the analysis unit points is completed, whether the statement related to the memory block in the analysis unit has the time-type memory problem may be identified based on the status analysis result. After status analysis of memory blocks to which all pointers in the analysis unit point is completed, the time-type memory problem in the analysis unit may be identified based on the obtained status analysis result, to obtain the detection result related to the time-type memory problem in the analysis unit. In this way, a user can learn of, based on the detection result, an area in which the time-type memory problem exists in the analysis unit. For example, the detection result includes one or more of the following: a module having the time-type memory problem, a code line having the time-type memory problem, a line or a column of a pointer having the time-type memory problem in the source code, or an execution path from a memory allocation point having the time-type memory problem to an error report point. The error report point includes a memory use point or a memory free point. In addition, the summary information of the analysis unit may be further generated based on the status analysis result of the memory block executed by the pointer in the analysis unit, to perform status analysis based on the summary information. For details, refer to the foregoing descriptions of the local analysis module 123. Details are not described herein again.

In a possible implementation, when the status analysis result indicates that the status of the memory block is a terminated state, it may be determined that a statement related to the memory block in the analysis unit has the time-type memory problem. The terminated state indicates that the memory block is not correctly used. In this case, an error report type and an error report statement may be determined based on a type of the terminated state. The error report type includes one or more of double free, memory leak, and use after free, and the error report statement includes one or more of a memory allocation statement, a memory use statement, and a memory free statement. In this way, a code line, a statement, or the like having time-type memory problem is identified. However, when the status analysis result indicates that the status of the memory block is an intermediate state, it may be determined that a statement related to the memory block in the analysis unit does not have the time-type memory problem. The intermediate state indicates that the memory block is being correctly used.

In this way, when the time-type memory problem is detected, memory behavior between different analysis units can be decoupled by dividing the source code. In this way, whether the time-type memory problem exists in each analysis unit can be separately analyzed, thereby avoiding global analysis, and reducing resource overheads. In addition, the summary information of the analysis unit is used, so that when there is call behavior between the analysis units and a caller is analyzed, summary information of a callee can be directly queried for, and internal memory behavior of the callee does not need to be analyzed, thereby reducing an analysis amount and improving analysis efficiency. In addition, in a detection process, cross-analysis-unit memory behavior analysis can be performed based on the summary information. In this way, cross-analysis-unit memory behavior detection can be implemented, and false and missing report rates are reduced. In addition, the summary information of the analysis unit includes the status of the memory block corresponding to the pointer associated with the formal parameter, the global variable, and the return value, so that the summary information can include all information about interaction between the analysis unit and the outside, thereby reducing a loss between the summary information of the analysis unit and actual memory behavior inside the analysis unit.

In some embodiments, the step of performing status analysis on the status of the memory block to which the pointer points in the analysis unit in S1302 may be specifically: iteratively performing status analysis on the status of the memory block to which the pointer in the analysis unit points. In a process of a current round of iteration, status analysis is performed, based on summary information generated in a previous round of iteration, on the status of the memory block to which the pointer in the analysis unit points. In this way, accurate summary information can be obtained through iterative analysis. For example, if the analysis units are funA and funB, and funA includes a p = funB() statement, when funA is analyzed, a status of p inherits a status of a return value of funB on the right. However, the status of the return value of funB needs to be obtained from a summary of funB. In this round of iteration, it is difficult to control a sequence of generating summary information of funA and funB. Therefore, summary information of funB generated in a previous round of iteration is used in this round of iteration. For example, to accelerate a detection speed, status analysis may be performed on statuses of memory blocks to which pointers in the analysis unit point in parallel and iteratively. For example, the current round of iteration may be a latest round of iteration. For example, if the latest round of iteration is a 5^{th} round of iteration, the 5^{th} round is the current round. In addition, if the current round is an i^{th} round, a previous round of the current round is an (i-1)^{th} round.

In this case, the step of generating the summary information of the analysis unit based on the status analysis result corresponding to the status analysis, and obtaining the detection result related to the time-type memory problem in the analysis unit in S 1303 may be specifically: in the iteration process, identifying the time-type memory problem in the analysis unit based on a status analysis result obtained in the current round of iteration, and updating the summary information of the analysis unit; and when summary information of the plurality of analysis units is no longer updated, using, as a final detection result, a time-type memory problem that exists in the plurality of analysis units and that is identified in a process of the last round of iteration. Because the summary information of all the analysis units is no longer updated, it may be understood that the summary information is correct in this case. Therefore, the time-type memory problem identified in this case is also accurate. In this way, the time-type memory problem identified in the process of the last round of iteration is used as the final detection result, so that detection accuracy can be improved. In addition, the summary information is constructed, and the summary information obtained in the previous round is iteratively used, so that a call graph (call graph) that describes a call relationship between all the analysis units does not need to be constructed, and an analysis sequence between the analysis units does not need to be considered. Moreover, because global pointer analysis needs to be performed to construct the call graph, consumed resource overheads are high. However, in this application, because the call graph does not need to be constructed, the resource overheads can be greatly reduced.

In another possible implementation, in addition to iteratively analyzing the plurality of analysis units, one analysis unit may be first processed, and then another analysis unit is processed. For example, still refer to FIG. 8. funD may be analyzed first, and then funC is analyzed after the analysis of funD is completed, that is, the analysis units are sequentially processed from bottom to top along the call graph of the functions. Certainly, another manner may alternatively be used. This may be specifically determined based on an actual situation, and is not limited herein.

In some embodiments, before S1302, when a plurality of different branches in a control flow graph of the analysis unit point to a same node, statuses of memory blocks to which pointers passed from the plurality of different branches pointer may be normalized. In this way, the statuses of the memory blocks to which the pointers passed from these branches point can be unique, thereby reducing the false and missing report rates. For example, during normalization, a wild pointer in the plurality of different branches may be converted into a null pointer. A status of a memory block to which the null pointer points may be any status. In addition, prompt information may alternatively be output to prompt the user to modify code in the analysis unit, so as to complete a normalization operation. For a process of normalizing the statuses of the memory blocks, refer to the foregoing descriptions of the status normalization module 910 in the time-type memory problem detection system 900. Details are not described herein again.

In some embodiments, before S1302, a redundant path in the analysis unit may be further eliminated, to improve detection efficiency and reduce the false and missing report rates. Eliminating the redundant path in the analysis unit includes one or more of the following:
when there are a dominance relationship and a post-dominance relationship between a memory allocation point and a memory free point of the memory block to which the second pointer in the analysis unit points, determining that reachability determining does not need to be performed on the memory block to which the second pointer points; or
when a condition in an if statement in the analysis unit is always true (that is, always satisfied), eliminating a branch whose condition is false in the if statement, that is, eliminating the branch whose condition is not satisfied in the if statement; or when a condition in an if statement in the analysis unit is always false (that is, always not satisfied), eliminating a branch whose condition is true in the if statement, that is, eliminating the branch whose condition is satisfied in the if statement; or
when a condition in a while statement in the analysis unit is always false (that is, always not satisfied), eliminating a branch whose condition is true in the while statement, that is, eliminating the branch whose condition is satisfied in the if statement; or
when a second if statement is executed immediately after a first if statement is executed in the analysis unit, and a value of a condition in the first if statement is the same as a value of a condition in the second if statement, eliminating the second if statement, adding a branch whose condition is true (that is, a branch whose condition is satisfied) in the second if statement to a branch whose condition is true in the first if statement, and adding a branch whose condition is false (that is, a branch whose condition is not satisfied) in the second if statement to a branch whose condition is false in the first if statement; or when a second if statement is executed immediately after a first if statement is executed in the analysis unit, and a value of a condition in the first if statement is opposite to a value of a condition in the second if statement, eliminating the second if statement, adding a branch whose condition is true in the second if statement to a branch whose condition is false in the first if statement, and adding a branch whose condition is false in the second if statement to a branch whose condition is true in the first if statement; or
when a call result of the function in the analysis unit is used as a determining condition, and the determining condition affects path reachability determining, performing function inline on the function; or when a call result of the function in the analysis unit is not used as a determining condition, or the determining condition does not affect path reachability determining, skipping performing inline on the function. For a process of eliminating the redundant path in the analysis unit, refer to the foregoing descriptions of the local optimization module 920 in the time-type memory problem detection system 900. Details are not described herein again.

In some embodiments, in a process of performing status analysis on the status of the memory block to which the pointer in the analysis unit points, when a plurality of different branches in a control flow graph of the analysis unit point to a same node, a first state of a memory block corresponding to the node when a first variable, passed from a 1^{st} branch in the plurality of branches, enters the node may be recorded. Then, based on the recorded first state, statements in a node on an edge that is associated with the node and that is not explored in the control flow graph are traversed, and status analysis is performed on a status of a memory block to which a pointer in a traversed statement points. In this way, path exploration space is simplified, path exploration efficiency is improved, and the detection efficiency is further improved. When the statements in the node on the edge that is associated with the node and that is not explored in the control flow graph are traversed, and status analysis is performed on the status of the memory block to which the pointer in the traversed statement points, the first state may be compared with a status of a memory block to which a pointer passed from another branch points, to determine whether the branch has a time-type memory problem. For details, refer to the foregoing descriptions of the local analysis module 123 in the time-type memory problem detection system 100. Details are not described herein again.

In some embodiments, when the first state is inconsistent with a second state of the memory block corresponding to the node when a pointer, passed from another branch in the plurality of branches, enters the node, the error report type and the error report statement are determined based on a conflict between the first state and the second state. The error report type includes one or more of the double free, the memory leak, and the use after free, and the error report statement includes one or more of the memory allocation statement, the memory use statement, and the memory free statement. In this way, the recorded state is compared with the state of the memory block corresponding to the node when the pointer, passed from the current branch, enters the node, so that it can be learned whether the two branches have the time-type memory problem, thereby improving the detection efficiency.

In some embodiments, when the first state is inconsistent with a second state of the memory block corresponding to the node when a pointer, passed from another branch in the plurality of branches, enters the node, and the first state is allocated, a null assignment statement is added to the another branch, where the null assignment statement is used to assign a null value to the pointer passed from the another branch. In this manner, the statuses of the memory blocks to which the pointers passed from the plurality of different branches point can be normalized, so that the statuses of the memory blocks to which the pointers passed from these branches point can be unique, thereby reducing the false and missing report rates.

In addition, prompt information may alternatively be output. The prompt information prompts to modify the second state to a null state, or modify the second state to the first state. In this way, the user can normalize, based on a requirement of the user, the statuses of the memory blocks to which the pointers passed from the plurality of different branches point, to resolve the conflict between the first state and the second state.

In some embodiments, after S1304, the detection result may be further corrected by using a constraint solver (for example, a Z3 solver). In this way, the false and missing report rates are further reduced.

It may be understood that sequence numbers of the steps do not mean execution sequences in the foregoing embodiments. The execution sequences of the processes should be determined based on functions and internal logic of the processes, and should not be construed as any limitation on the implementation processes of embodiments of this application.

The foregoing describes the time-type memory security detection method provided in embodiments of this application. The following describes, based on the method in the foregoing embodiments, a time-type memory security detection apparatus provided in embodiments of this application.

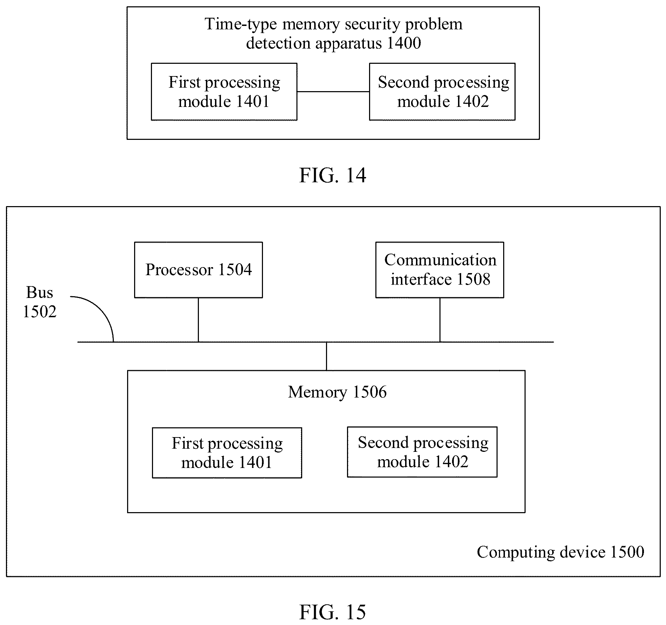

For example, FIG. 14 is a diagram of a structure of a time-type memory security detection apparatus according to an embodiment of this application. As shown in FIG. 14, the time-type memory security detection apparatus may include a first processing module 1401 and a second processing module 1402. There are the first processing module 1401 and the second processing module 1402. The first processing module 1401 is configured to obtain a plurality of analysis units based on source code, where the analysis unit includes a function or a function group. The second processing module 1402 is configured to: perform status analysis on a status of a memory block to which a pointer in the analysis unit points, where the plurality of analysis units include a first analysis unit and a second analysis unit, the first analysis unit includes a function call statement, and the function call statement is used to call the second analysis unit; and when the function call statement is analyzed, perform, based on summary information of the second analysis unit, status analysis on a status of a memory block to which a pointer associated with the function call statement points, where the summary information of the analysis unit is used to describe memory statuses present when a memory block to which an input/output pointer in the analysis unit points enters and exits the analysis unit. The second processing module 1402 is further configured to: generate summary information of the analysis unit based on a status analysis result corresponding to the analysis unit, and obtain a detection result related to a time-type memory problem in the analysis unit. For example, the first processing module 1401 may be the program division module 110 described above. The second processing module 1402 may be the summary generation module 120 described above, or may mainly include the status normalization module 910 and the summary generation module 120 described above, or may mainly include the local optimization module 920 and the summary generation module 120 described above, or may mainly include the status normalization module 910, the local optimization module 920, and the summary generation module 120 described above.

In some embodiments, when performing status analysis on the status of the memory block to which the pointer in the analysis unit points, the second processing module 1402 is specifically configured to iteratively perform status analysis on the status of the memory block to which the pointer in the analysis unit points, where in a process of a current round of iteration, status analysis is performed, based on summary information generated in a previous round of iteration, on the status of the memory block to which the pointer in the analysis unit points.

When generating the summary information of the analysis unit based on the status analysis result corresponding to the status analysis, and obtaining the detection result related to the time-type memory problem in the analysis unit, the second processing module 1402 is specifically configured to: in the iteration process, identify the time-type memory problem in the analysis unit based on a status analysis result obtained in the current round of iteration, and update the summary information of the analysis unit; and when summary information of the plurality of analysis units is no longer updated, use, as a final detection result, a time-type memory problem that exists in the plurality of analysis units and that is identified in a process of the last round of iteration.

In some embodiments, when performing status analysis on the status of the memory block to which the pointer in the analysis unit points, the second processing module 1402 is specifically configured to: traverse statements in the analysis unit according to a preset status transition rule, and perform status analysis on the status of the memory block to which the pointer in the analysis unit points. The status transition rule is used to describe a status change rule of a memory block to which a first pointer points when a value is assigned to the first pointer or the first pointer is used.

In some embodiments, when identifying the time-type memory problem in the analysis unit based on the status analysis result corresponding to the status analysis, the second processing module 1402 is specifically configured to: when the status analysis result indicates that the status of the memory block is a terminated state, determine that a statement related to the memory block in the analysis unit has the time-type memory problem, and determine an error report type and an error report statement based on a type of the terminated state, where the terminated state indicates that the memory block is not correctly used, the error report type includes one or more of double free, memory leak, and use after free, and the error report statement includes one or more of a memory allocation statement, a memory use statement, and a memory free statement; or when the status analysis result indicates that the status of the memory block is an intermediate state, determine that a statement related to the memory block in the analysis unit does not have the time-type memory problem, where the intermediate state indicates that the memory block is being correctly used.

In some embodiments, the summary information of the analysis unit includes summary information of a pointer that is in the analysis unit and that is associated with a formal parameter, a global variable, and a return value, and the pointer associated with the formal parameter, the global variable, and the return value includes a second pointer. For example, the pointer associated with the formal parameter, the global variable, and the return value may be understood as the input/output pointer.

Summary information of the second pointer includes one or more of the following: an identifier of the second pointer, a location of a formal parameter, a global variable, or a return value associated with the second pointer in the analysis unit, a relationship between the second pointer and a formal parameter, a global variable, and a return value in the analysis unit, a status present when a memory block to which the second pointer points enters or exits the analysis unit, or alias and non-alias relationships between the second pointer and a pointer other than the second pointer in the pointer that is in the analysis unit and that is associated with the formal parameter, the global variable, and the return value.

In some embodiments, the input/output pointer in the analysis unit may include one or more of the following: a pointer that is related to a formal parameter or a return value and that is brought in or brought out of the analysis unit, or a global variable, or a pointer that is related to the global variable and that is brought in or brought out of the analysis unit by the global variable.

In some embodiments, before performing status analysis on the status of the memory block to which the pointer in the analysis unit points, the second processing module 1402 is further configured to: when a plurality of different branches in a control flow graph of the analysis unit point to a same node, normalize statuses of memory blocks to which pointers passed from the plurality of different branches point.

In some embodiments, when normalizing the statuses of the memory blocks to which the pointers passed from the plurality of different branches point, the second processing module 1402 is specifically configured to: convert a wild pointer in the plurality of different branches into a null pointer.

In some embodiments, before performing status analysis on the status of the memory block to which the pointer in the analysis unit points, the second processing module 1402 is further configured to: eliminate a redundant path in the analysis unit.

In some embodiments, eliminating the redundant path in the analysis unit includes one or more of the following:
when there are a dominance relationship and a post-dominance relationship between a memory allocation point and a memory free point of the memory block to which the second pointer in the analysis unit points, determining that reachability determining does not need to be performed on the memory block to which the second pointer points; or
when a condition in an if statement in the analysis unit is always true, eliminating a branch whose condition is false in the if statement, or when a condition in an if statement in the analysis unit is always false, eliminating a branch whose condition is true in the if statement; or
when a condition in a while statement in the analysis unit is always false, eliminating a branch whose condition is true in the while statement; or
when a second if statement is executed immediately after a first if statement is executed in the analysis unit, and a value of a condition in the first if statement is the same as a value of a condition in the second if statement, eliminating the second if statement, adding a branch whose condition is true in the second if statement to a branch whose condition is true in the first if statement, and adding a branch whose condition is false in the second if statement to a branch whose condition is false in the first if statement; or when a second if statement is executed immediately after a first if statement is executed in the analysis unit, and a value of a condition in the first if statement is opposite to a value of a condition in the second if statement, eliminating the second if statement, adding a branch whose condition is true in the second if statement to a branch whose condition is false in the first if statement, and adding a branch whose condition is false in the second if statement to a branch whose condition is true in the first if statement; or
when a call result of the function in the analysis unit is used as a determining condition, and the determining condition affects path reachability determining, performing function inline on the function; or when a call result of the function in the analysis unit is not used as a determining condition, or the determining condition does not affect path reachability determining, skipping performing inline on the function.

In some embodiments, the second processing module 1402 is further configured to: in a process of performing status analysis on the status of the memory block to which the pointer in the analysis unit points, when a plurality of different branches in a control flow graph of the analysis unit point to a same node, record a first state of a memory block corresponding to the node when a first variable, passed from a 1^{st} branch in the plurality of branches, enters the node; and based on the recorded first state, traverse statements in a node on an edge that is associated with the node and that is not explored in the control flow graph, and perform status analysis on a status of a memory block to which a pointer in a traversed statement points.

In some embodiments, the second processing module 1402 is further configured to: when the first state is inconsistent with a second state of the memory block corresponding to the node when a pointer, passed from another branch in the plurality of branches, enters the node, determine the error report type and the error report statement based on a conflict between the first state and the second state, where the error report type includes one or more of the double free, the memory leak, and the use after free, and the error report statement includes one or more of the memory allocation statement, the memory use statement, and the memory free statement.

In some embodiments, the second processing module 1402 is further configured to: when the first state is inconsistent with a second state of the memory block corresponding to the node when a pointer, passed from another branch in the plurality of branches, enters the node, and the first state is allocated, add a null assignment statement to the another branch, where the null assignment statement is used to assign a null value to the pointer passed from the another branch; or output prompt information, where the prompt information prompts to modify the second state to a null state, or modify the second state to the first state.

In some embodiments, after obtaining the detection result related to the time-type memory problem in the analysis unit, the second processing module 1402 is further configured to: correct the detection result by using a constraint solver.

In some embodiments, the detection result includes one or more of the following: a module having the time-type memory problem, a code line having the time-type memory problem, a line or a column of a pointer having the time-type memory problem in the source code, or an execution path from a memory allocation point having the time-type memory problem to an error report point, where the error report point includes a memory use point or a memory free point.

In some embodiments, both the first processing module 1401 and the second processing module 1402 shown in FIG. 14 may be implemented by software, or may be implemented by hardware. For example, the following uses the first processing module 1401 as an example to describe an implementation of the first processing module 1401. Similarly, for an implementation of the second processing module 1402, refer to the implementation of the first processing module 1401. In addition, both the processing module 901 and the communication module 902 shown in FIG. 15 may be implemented by software, or may be implemented by hardware. For details, refer to the descriptions of the communication module 902 and the processing module 901 shown in FIG. 14. Details are not described herein again.

When a module is used as an example of a software functional unit, the first processing module 1401 may include code that runs on a computing instance. The computing instance may include at least one of a physical host (computing device), a virtual machine, and a container. Further, there may be one or more computing instances. For example, the first processing module 1401 may include code that runs on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. A communication gateway needs to be set in each VPC for communication between two VPCs in a same region or between VPCs in different regions. Interconnection between the VPCs is implemented through the communication gateway.

When a module is used as an example of a hardware functional unit, the first processing module 1401 may include at least one computing device, for example, a server. Alternatively, the first processing module 1401 may be a device implemented by using an application-specific integrated circuit (application-specific integrated circuit, ASIC) a programmable logic device (programmable logic device, PLD), or the like. The PLD may be a complex programmable logic device (complex programmable logic device, CPLD), a field programmable gate array (field programmable gate array, FPGA), generic array logic (generic array logic, GAL), or any combination thereof.

The plurality of computing devices included in the first processing module 1401 may be distributed in a same region or different regions. The plurality of computing devices included in the first processing module 1401 may be distributed in a same AZ or different AZs. Likewise, the plurality of computing devices included in the first processing module 1401 may be distributed in a same VPC or a plurality of VPCs. The plurality of computing devices may be any combination of computing devices such as a server, an ASIC, a PLD, a CPLD, an FPGA, and GAL.

It should be noted that, in another embodiment, the first processing module 1401 may be configured to perform any step in the time-type memory problem detection method described in the foregoing embodiments, the second processing module 1402 may be configured to perform any step in the time-type memory problem detection method described in the foregoing embodiments, steps that the first processing module 1401 and the second processing module 1402 are responsible for implementing may be specified as required, and the first processing module 1401 and the second processing module 1402 respectively implement different steps in the time-type memory problem detection method described in the foregoing embodiments, to implement all functions of the time-type memory problem detection apparatus 1400 shown in FIG. 14.

This application further provides a computing device 1500. As shown in FIG. 15, the computing device 1500 includes a bus 1502, a processor 1504, a memory 1506, and a communication interface 1508. The processor 1504, the memory 1506, and the communication interface 1508 communicate with each other through the bus 1502. The computing device 1500 may be a server or an electronic device. It should be understood that quantities of processors and memories in the computing device 1500 are not limited in this application.

The bus 1502 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of indication, the bus is indicated by only one line in FIG. 15, but this does not indicate that there is only one bus or one type of bus. The bus 1504 may include a path for transferring information between components (for example, the memory 1506, the processor 1504, and the communication interface 1508) in the computing device 1500.

The processor 1504 may include any one or more of processors such as a central processing unit (central processing unit, CPU), a graphics processing unit (graphics processing unit, GPU), a micro processor (micro processor, MP), or a digital signal processor (digital signal processor, DSP).

The memory 1506 may include a volatile memory (volatile memory), for example, a random access memory (random access memory, RAM). The processor 1504 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1506 stores executable program code, and the processor 1504 executes the executable program code to separately implement functions of the first processing module 1401 and the second processing module 1402 shown in FIG. 14, so as to implement the time-type memory problem detection method described in the foregoing embodiments. In other words, the memory 1506 stores instructions used to perform the time-type memory problem detection method described in the foregoing embodiments.

Alternatively, the memory 1506 stores executable code, and the processor 1504 executes the executable code to separately implement functions of the time-type memory problem detection apparatus 1400 shown in FIG. 14, so as to implement the time-type memory problem detection method described in the foregoing embodiments. In other words, the memory 1506 stores the instructions used to perform the time-type memory problem detection method described in the foregoing embodiments.

The communication interface 1503 implements communication between the computing device 1500 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be an electronic device like a desktop computer, a notebook computer, or a smartphone.

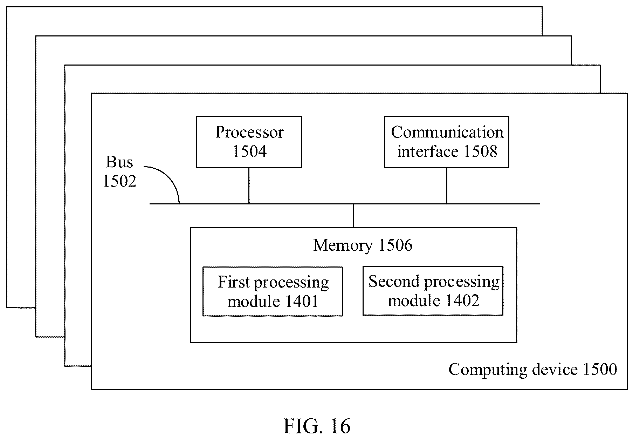

As shown in FIG. 16, the computing device cluster includes at least one computing device 1500. A memory 1506 in the one or more computing devices 1500 in the computing device cluster may store same instructions used to perform the time-type memory problem detection method described in the foregoing embodiments.

In some possible implementations, the memory 1506 in each of the one or more computing devices 1500 in the computing device cluster may store a part of instructions used to perform the time-type memory problem detection method described in the foregoing embodiments. In other words, a combination of the one or more computing devices 1500 may jointly execute the instructions used to perform the time-type memory problem detection method described in the foregoing embodiments.

It should be noted that memories 1506 in different computing devices 1500 in the computing device cluster may store different instructions, and different instructions are separately used to perform a part of the functions of the time-type memory problem detection apparatus 1400 shown in FIG. 14. In other words, the instructions stored in the memories 1506 in different computing devices 1500 may implement the functions of one or more of the first processing module 1401 and the second processing module 1402.

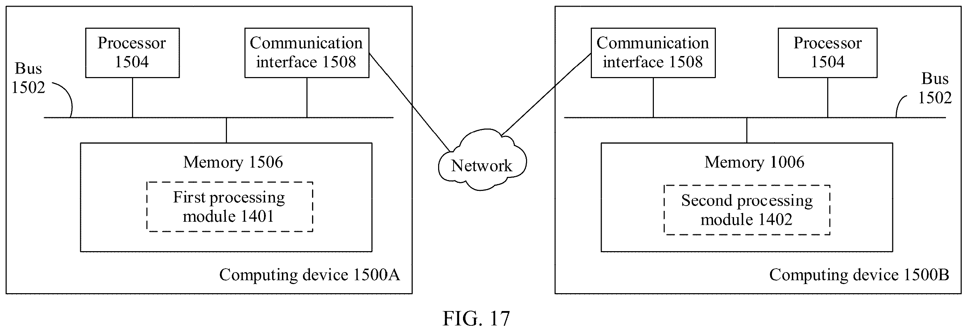

In some possible implementations, the one or more computing devices in the computing device cluster may be connected over a network. The network may be a wide area network, a local area network, or the like. FIG. 17 shows a possible implementation. As shown in FIG. 17, two computing devices 1500A and 1500B are connected over a network. Specifically, each computing device is connected to the network through a communication interface in the computing device. In this possible implementation, a memory 1506 in the computing device 1500A stores instructions for performing the function of the first processing module 1401. In addition, a memory 1506 in the computing device 1500B stores instructions for performing the function of the second processing module 1402.

It should be understood that functions of the computing device 1500A shown in FIG. 17 may alternatively be completed by a plurality of computing devices 1500. Similarly, functions of the computing device 1500B may alternatively be performed by a plurality of computing devices 1500.

An embodiment of this application further provides another computing device cluster. For a connection relationship between computing devices in the computing device cluster, refer to similar connection manners of the computing device clusters in FIG. 16 and FIG. 17. A difference lies in that a memory 1506 in one or more computing devices 1500 in the computing device cluster may store same instructions used to perform the method in the foregoing embodiments.

In some possible implementations, the memory 1506 in each of the one or more computing devices 1500 in the computing device cluster may store a part of instructions used to perform the foregoing time-type memory problem detection method. In other words, a combination of the one or more computing devices 1500 may jointly execute the instructions used to perform the foregoing time-type memory problem detection method.

According to the method in the foregoing embodiments, an embodiment of this application provides a computer-readable storage medium, including computer program instructions. When the computer program instructions are executed by a computing device, the computing device performs the method in the foregoing embodiments; or when the computer program instructions are executed by a computing device cluster, the computing device cluster performs the method in the foregoing embodiments. For example, the computer-readable storage medium may be any usable medium that can be stored by the computing device, or a data storage device like a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

According to the method in the foregoing embodiments, an embodiment of this application provides a computer program product including instructions. When the instructions are run by a computing device, the computing device is enabled to perform the method in the foregoing embodiments; or when the instructions are run by a computing device cluster, the computing device cluster is enabled to perform the method in the foregoing embodiments.

It may be understood that, the processor in embodiments of this application may be a central processing unit (central processing unit, CPU), may be another general-purpose processor, a digital signal processor (digital signal processor, DSP), an application-specific integrated circuit (application-specific integrated circuit, ASIC), a field programmable gate array (field programmable gate array, FPGA), another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or a part of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It may be understood that various numbers in embodiments of this application are merely used for distinguishing for ease of description, and are not used to limit the scope of embodiments of this application.

Finally, it should be noted that the foregoing embodiments are merely intended for describing the technical solutions of this application but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions of embodiments of this application.

## Claims

1. A time-type memory security detection method, wherein the method comprises:
obtaining a plurality of analysis units based on source code, wherein the analysis unit comprises a function or a function group;
performing status analysis on a status of a memory block to which a pointer in the analysis unit points, wherein the plurality of analysis units comprise a first analysis unit and a second analysis unit, the first analysis unit comprises a function call statement, and the function call statement is used to call the second analysis unit; and when the function call statement is analyzed, performing, based on summary information of the second analysis unit, status analysis on a status of a memory block to which a pointer associated with the function call statement points, wherein the summary information of the analysis unit is used to describe memory statuses present when a memory block to which an input/output pointer in the analysis unit points enters and exits the analysis unit; and
generating summary information of the analysis unit based on a status analysis result corresponding to the analysis unit, and obtaining a detection result related to a time-type memory problem in the analysis unit.

2. The method according to claim 1, wherein
performing status analysis on the status of the memory block to which the pointer in the analysis unit points comprises:
iteratively performing status analysis on the status of the memory block to which the pointer in the analysis unit points, wherein in a process of a current round of iteration, status analysis is performed, based on summary information generated in a previous round of iteration, on the status of the memory block to which the pointer in the analysis unit points; and
generating the summary information of the analysis unit based on the status analysis result corresponding to the status analysis, and obtaining the detection result related to the time-type memory problem in the analysis unit comprises:
in the iteration process, identifying the time-type memory problem in the analysis unit based on a status analysis result obtained in the current round of iteration, and updating the summary information of the analysis unit; and when summary information of the plurality of analysis units is no longer updated, using, as a final detection result, a time-type memory problem that exists in the plurality of analysis units and that is identified in a process of the last round of iteration.

3. The method according to claim 1 or 2, wherein the summary information of the analysis unit comprises summary information of the input/output pointer in the analysis unit, and the input/output pointer comprises a second pointer; and
summary information of the second pointer comprises one or more of the following: an identifier of the second pointer, a location of a formal parameter, a global variable, or a return value associated with the second pointer in the analysis unit, a relationship between the second pointer and a formal parameter, a global variable, and a return value in the analysis unit, a status present when a memory block to which the second pointer points enters or exits the analysis unit, or alias and non-alias relationships between the second pointer and a pointer other than the second pointer in the input/output pointer.

4. The method according to any one of claims 1 to 3, wherein the input/output pointer in the analysis unit comprises one or more of the following:
a pointer that is related to a formal parameter or a return value and that is brought in or brought out of the analysis unit, or a global variable, or a pointer that is related to the global variable and that is brought in or brought out of the analysis unit by the global variable.

5. The method according to any one of claims 1 to 4, wherein performing status analysis on the status of the memory block to which the pointer in the analysis unit points comprises:
traversing statements in the analysis unit according to a preset status transition rule, and performing status analysis on the status of the memory block to which the pointer in the analysis unit points, wherein the status transition rule is used to describe a status change rule of a memory block to which a first pointer points when a value is assigned to the first pointer or the first pointer is used.

6. The method according to any one of claims 1 to 5, wherein identifying the time-type memory problem in the analysis unit based on the status analysis result corresponding to the status analysis specifically comprises:
when the status analysis result indicates that the status of the memory block is a terminated state, determining that a statement related to the memory block in the analysis unit has the time-type memory problem, and determining an error report type and an error report statement based on a type of the terminated state, wherein the terminated state indicates that the memory block is not correctly used, the error report type comprises one or more of double free, memory leak, and use after free, and the error report statement comprises one or more of a memory allocation statement, a memory use statement, and a memory free statement; or
when the status analysis result indicates that the status of the memory block is an intermediate state, determining that a statement related to the memory block in the analysis unit does not have the time-type memory problem, wherein the intermediate state indicates that the memory block is being correctly used.

7. The method according to any one of claims 1 to 6, wherein before performing status analysis on the status of the memory block to which the pointer in the analysis unit points, the method further comprises:
when a plurality of different branches in a control flow graph of the analysis unit point to a same node, normalizing statuses of memory blocks to which pointers passed from the plurality of different branches point.

8. The method according to claim 7, wherein normalizing the statuses of the memory blocks to which the pointers passed from the plurality of different branches point specifically comprises:
converting a wild pointer in the plurality of different branches into a null pointer.

9. The method according to any one of claims 1 to 8, wherein before performing status analysis on the status of the memory block to which the pointer in the analysis unit points, the method further comprises:
eliminating a redundant path in the analysis unit.

10. The method according to claim 9, wherein eliminating the redundant path in the analysis unit comprises one or more of the following:
when there are a dominance relationship and a post-dominance relationship between a memory allocation point and a memory free point of the memory block to which the second pointer in the analysis unit points, determining that reachability determining does not need to be performed on the memory block to which the second pointer points; or
when a condition in an if statement in the analysis unit is always true, eliminating a branch whose condition is false in the if statement, or when a condition in an if statement in the analysis unit is always false, eliminating a branch whose condition is true in the if statement; or
when a condition in a while statement in the analysis unit is always false, eliminating a branch whose condition is true in the while statement; or
when a second if statement is executed immediately after a first if statement is executed in the analysis unit, and a value of a condition in the first if statement is the same as a value of a condition in the second if statement, eliminating the second if statement, adding a branch whose condition is true in the second if statement to a branch whose condition is true in the first if statement, and adding a branch whose condition is false in the second if statement to a branch whose condition is false in the first if statement; or when a second if statement is executed immediately after a first if statement is executed in the analysis unit, and a value of a condition in the first if statement is opposite to a value of a condition in the second if statement, eliminating the second if statement, adding a branch whose condition is true in the second if statement to a branch whose condition is false in the first if statement, and adding a branch whose condition is false in the second if statement to a branch whose condition is true in the first if statement; or
when a call result of the function in the analysis unit is used as a determining condition, and the determining condition affects path reachability determining, performing function inline on the function; or when a call result of the function in the analysis unit is not used as a determining condition, or the determining condition does not affect path reachability determining, skipping performing inline on the function.

11. The method according to any one of claims 1 to 6 and 9 to 10, wherein the method further comprises:
in a process of performing status analysis on the status of the memory block to which the pointer in the analysis unit points, when a plurality of different branches in a control flow graph of the analysis unit point to a same node, recording a first state of a memory block corresponding to the node when a first variable, passed from a 1^{st} branch in the plurality of branches, enters the node; and
based on the recorded first state, traversing statements in a node on an edge that is associated with the node and that is not explored in the control flow graph, and performing status analysis on a status of a memory block to which a pointer in a traversed statement points.

12. The method according to claim 11, wherein the method further comprises:
when the first state is inconsistent with a second state of the memory block corresponding to the node when a pointer, passed from another branch in the plurality of branches, enters the node, determining the error report type and the error report statement based on a conflict between the first state and the second state, wherein
the error report type comprises one or more of the double free, the memory leak, and the use after free, and the error report statement comprises one or more of the memory allocation statement, the memory use statement, and the memory free statement.

13. The method according to claim 11, wherein the method further comprises:
when the first state is inconsistent with a second state of the memory block corresponding to the node when a pointer, passed from another branch in the plurality of branches, enters the node, and the first state is allocated, adding a null assignment statement to the another branch, wherein the null assignment statement is used to assign a null value to the pointer passed from the another branch; or
outputting prompt information, wherein the prompt information prompts to modify the second state to a null state, or modify the second state to the first state.

14. The method according to any one of claims 1 to 13, wherein after obtaining the detection result related to the time-type memory problem in the source code, the method further comprises:
correcting the detection result by using a constraint solver.

15. The method according to any one of claims 1 to 14, wherein the detection result comprises one or more of the following:
a module having the time-type memory problem, a code line having the time-type memory problem, a line or a column of a pointer having the time-type memory problem in the source code, or an execution path from a memory allocation point having the time-type memory problem to an error report point, wherein the error report point comprises a memory use point or a memory free point.

16. A time-type memory security detection apparatus, comprising:
a first processing module, configured to obtain a plurality of analysis units based on source code, wherein the analysis unit comprises a function or a function group; and
a second processing module, configured to: perform status analysis on a status of a memory block to which a pointer in the analysis unit points, wherein the plurality of analysis units comprise a first analysis unit and a second analysis unit, the first analysis unit comprises a function call statement, and the function call statement is used to call the second analysis unit; and when the function call statement is analyzed, perform, based on summary information of the second analysis unit, status analysis on a status of a memory block to which a pointer associated with the function call statement points, wherein the summary information of the analysis unit is used to describe memory statuses present when a memory block to which an input/output pointer in the analysis unit points enters and exits the analysis unit, wherein
the second processing module is further configured to: generate summary information of the analysis unit based on a status analysis result corresponding to the analysis unit, and obtain a detection result related to a time-type memory problem in the analysis unit.

17. The apparatus according to claim 16, wherein
when performing status analysis on the status of the memory block to which the pointer in the analysis unit points, the second processing module is specifically configured to:
iteratively perform status analysis on the status of the memory block to which the pointer in the analysis unit points, wherein in a process of a current round of iteration, status analysis is performed, based on summary information generated in a previous round of iteration, on the status of the memory block to which the pointer in the analysis unit points; and
when generating the summary information of the analysis unit based on the status analysis result corresponding to the status analysis, identifying the time-type memory problem in the analysis unit, and obtaining the detection result related to the time-type memory problem in the analysis unit, the second processing module is specifically configured to:
in the iteration process, identify the time-type memory problem in the analysis unit based on a status analysis result obtained in the current round of iteration, and update the summary information of the analysis unit; and when summary information of the plurality of analysis units is no longer updated, use, as a final detection result, a time-type memory problem that exists in the plurality of analysis units and that is identified in a process of the last round of iteration.

18. The apparatus according to claim 16 or 17, wherein the summary information of the analysis unit comprises summary information of the input/output pointer in the analysis unit, and the input/output pointer comprises a second pointer; and
summary information of the second pointer comprises one or more of the following: an identifier of the second pointer, a location of a formal parameter, a global variable, or a return value associated with the second pointer in the analysis unit, a relationship between the second pointer and a formal parameter, a global variable, and a return value in the analysis unit, a status present when a memory block to which the second pointer points enters or exits the analysis unit, or alias and non-alias relationships between the second pointer and a pointer other than the second pointer in the input/output pointer.

19. The apparatus according to any one of claims 16 to 18, wherein the input/output pointer in the analysis unit comprises one or more of the following:
a pointer that is related to a formal parameter or a return value and that is brought in or brought out of the analysis unit, or a global variable, or a pointer that is brought in or brought out of the analysis unit by the global variable.

20. The pointer according to any one of claims 16 to 19, wherein when performing status analysis on the status of the memory block to which the pointer in the analysis unit points, the second processing module is specifically configured to:
traverse statements in the analysis unit according to a preset status transition rule, and perform status analysis on the status of the memory block to which the pointer in the analysis unit points, wherein the status transition rule is used to describe a status change rule of a memory block to which a first pointer points when a value is assigned to the first pointer or the first pointer is used.

21. The apparatus according to any one of claims 16 to 20, wherein when identifying the time-type memory problem in the analysis unit based on the status analysis result corresponding to the status analysis, the second processing module is specifically configured to:
when the status analysis result indicates that the status of the memory block is a terminated state, determine that a statement related to the memory block in the analysis unit has the time-type memory problem, and determine an error report type and an error report statement based on a type of the terminated state, wherein the terminated state indicates that the memory block is not correctly used, the error report type comprises one or more of double free, memory leak, and use after free, and the error report statement comprises one or more of a memory allocation statement, a memory use statement, and a memory free statement; or
when the status analysis result indicates that the status of the memory block is an intermediate state, determine that a statement related to the memory block in the analysis unit does not have the time-type memory problem, wherein the intermediate state indicates that the memory block is being correctly used.

22. The apparatus according to any one of claims 16 to 21, wherein before performing status analysis on the status of the memory block to which the pointer in the analysis unit points, the second processing module is further configured to:
when a plurality of different branches in a control flow graph of the analysis unit point to a same node, normalize statuses of memory blocks to which pointers passed from the plurality of different branches point.

23. The apparatus according to claim 22, wherein when normalizing the statuses of the memory blocks to which the pointers passed from the plurality of different branches point, the second processing module is specifically configured to:
convert a wild pointer in the plurality of different branches into a null pointer.

24. The apparatus according to any one of claims 16 to 23, wherein before performing status analysis on the status of the memory block to which the pointer in the analysis unit points, the second processing module is further configured to:
eliminate a redundant path in the analysis unit.

25. The apparatus according to claim 24, wherein eliminating the redundant path in the analysis unit comprises one or more of the following:
when there are a dominance relationship and a post-dominance relationship between a memory allocation point and a memory free point of the memory block to which the second pointer in the analysis unit points, determining that reachability determining does not need to be performed on the memory block to which the second pointer points; or
when a condition in an if statement in the analysis unit is always true, eliminating a branch whose condition is false in the if statement, or when a condition in an if statement in the analysis unit is always false, eliminating a branch whose condition is true in the if statement; or
when a condition in a while statement in the analysis unit is always false, eliminating a branch whose condition is true in the while statement; or
when a second if statement is executed immediately after a first if statement is executed in the analysis unit, and a value of a condition in the first if statement is the same as a value of a condition in the second if statement, eliminating the second if statement, adding a branch whose condition is true in the second if statement to a branch whose condition is true in the first if statement, and adding a branch whose condition is false in the second if statement to a branch whose condition is false in the first if statement; or when a second if statement is executed immediately after a first if statement is executed in the analysis unit, and a value of a condition in the first if statement is opposite to a value of a condition in the second if statement, eliminating the second if statement, adding a branch whose condition is true in the second if statement to a branch whose condition is false in the first if statement, and adding a branch whose condition is false in the second if statement to a branch whose condition is true in the first if statement; or
when a call result of the function in the analysis unit is used as a determining condition, and the determining condition affects path reachability determining, performing function inline on the function; or when a call result of the function in the analysis unit is not used as a determining condition, or the determining condition does not affect path reachability determining, skipping performing inline on the function.

26. The apparatus according to any one of claims 16 to 21, 24, and 25, wherein the second processing module is further configured to:
in a process of performing status analysis on the status of the memory block to which the pointer in the analysis unit points, when a plurality of different branches in a control flow graph of the analysis unit point to a same node, record a first state of a memory block corresponding to the node when a first variable, passed from a 1^{st} branch in the plurality of branches, enters the node; and
based on the recorded first state, traverse statements in a node on an edge that is associated with the node and that is not explored in the control flow graph, and perform status analysis on a status of a memory block to which a pointer in a traversed statement points.

27. The apparatus according to claim 26, wherein the second processing module is further configured to:
when the first state is inconsistent with a second state of the memory block corresponding to the node when a pointer, passed from another branch in the plurality of branches, enters the node, determine the error report type and the error report statement based on a conflict between the first state and the second state, wherein
the error report type comprises one or more of the double free, the memory leak, and the use after free, and the error report statement comprises one or more of the memory allocation statement, the memory use statement, and the memory free statement.

28. The apparatus according to claim 26, wherein the second processing module is further configured to:
when the first state is inconsistent with a second state of the memory block corresponding to the node when a pointer, passed from another branch in the plurality of branches, enters the node, and the first state is allocated, add a null assignment statement to the another branch, wherein the null assignment statement is used to assign a null value to the pointer passed from the another branch; or
output prompt information, wherein the prompt information prompts to modify the second state to a null state, or modify the second state to the first state.

29. The apparatus according to any one of claims 16 to 28, wherein after outputting the detection result related to the time-type memory problem in the source code, the second processing module is further configured to:
correct the detection result by using a constraint solver.

30. The apparatus according to any one of claims 16 to 29, wherein the detection result comprises one or more of the following:
a module having the time-type memory problem, a code line having the time-type memory problem, a line or a column of a pointer having the time-type memory problem in the source code, or an execution path from a memory allocation point having the time-type memory problem to an error report point, wherein the error report point comprises a memory use point or a memory free point.

31. A computing device cluster, comprising at least one computing device, wherein each computing device comprises a processor and a memory; and
the processor of the at least one computing device is configured to execute instructions stored in the memory of the at least one computing device, so that the computing device cluster performs the method according to any one of claims 1 to 15.

32. A computer-readable storage medium, comprising computer program instructions, wherein when the instructions are run by a computing device cluster, the computing device cluster is enabled to perform the method according to any one of claims 1 to 15, and the computing device cluster comprises at least one computing device.

33. A computer program product comprising instructions, wherein when the instructions are run by a computing device cluster, the computing device cluster is enabled to perform the method according to any one of claims 1 to 15, and the computing device cluster comprises at least one computing device.
